# EUROPÄISCHE PATENTSCHRIFT

(11) **EP 4 163 901 B1**
(45) Veröffentlichungstag und Bekanntmachung des Hinweises auf die Patenterteilung: **26.06.2024**
(21) Anmeldenummer: 21201505.1
(22) Anmeldetag: 07.10.2021
(51) Int. Cl.: G09B 23/10

(54) **VERSUCHSGERÄT ZUR DURCHFÜHRUNG VON UNTERSUCHUNGEN AN FACHWERKEN**
TEST APPARATUS FOR CARRYING OUT INVESTIGATIONS ON A TRUSS
APPAREIL D'ESSAI PERMETTANT DE METTRE EN OEUVRE DES ESSAIS SUR DES TREILLIS

(43) Veröffentlichungstag der Anmeldung: 12.04.2023
(73) Patentinhaber: G.U.N.T. Gerätebau GmbH, 22885 Barsbüttel (DE)
(72) Erfinder: Kellermann, Christian, 22946 Grande (DE); Jakob, Sergej, 22549 Hamburg (DE)
(74) Vertreter: Hauck Patentanwaltspartnerschaft mbB

(56) Entgegenhaltungen:
- CN-A- 106 205 354
- CN-A- 110 288 881
- CN-A- 111 932 998
- CN-A- 113 257 089
- Gunt Gerätebau: "SE 110.21 Forces in Various Single Plane Trusses * Measurement of the bar forces in a single plane truss 1 * Construction of various truss forms 1 * Bars with strain gauge full bridges to measure bar force 1 * Computerised evaluation of experiments", , 30. September 2010 (2010-09-30), Seiten 1-3, XP055898204, Gefunden im Internet: URL:http://www.usdidactic.com/images/produ ktbilder/02211021/Datenblatt/02211021%202. pdf [gefunden am 2022-03-07]

## Beschreibung

Die Erfindung betrifft ein Versuchsgerät zur Durchführung von Untersuchungen an Fachwerken.

Das Versuchsgerät dient der technischen Ausbildung insbesondere von Studierenden des Bauingenieurwesens und des Maschinenbaus an Universitäten, Fachhochschulen und Technikerschulen auf dem Gebiet der Statik und Dynamik von Fachwerken.

Das Versuchsgerät SE 110.21 der G.U.N.T. Gerätebau GmbH für die Messung von Kräften in verschiedenen ebenen Fachwerken umfasst einen vertikalen Rahmen, Auflager zum Fixieren des Fachwerkes an dem Rahmen, verschiedene Gruppen mit unterschiedlich langen Stäben mit DMS- Sensoren zur Kraftmessung und eine am Rahmen befestigbare, einstellbare Belastungsvorrichtung mit Kraftmeßuhr. Die Stäbe sind über Knotenscheiben mit den Auflagern, miteinander und mit der Belastungsvorrichtung verbunden. Die DMS-Sensoren des Stabes sind über separate Kabel mit einem Messverstärker mit 16 Eingangskanälen verbunden. Die Auswertung der Messwerte erfolgt an einem PC. Mit einer speziellen Software werden die Messwerte verwaltet und die Stabkräfte grafisch dargestellt.

Ähnliche Versuchsgeräte mit einem Rahmen, Auflagern, Stäben mit DMS-Messtechnik und Belastungseinrichtungen, bei denen die Stäbe einzeln mit den Messwertverarbeitungs- und Auswerteeinrichtungen verkabelt werden müssen bzw. für die Auswertung das jeweilige Fachwerk vom Anwender eingegeben werden muss, sind die Versuchsgeräte Cussons SSC 114, TQ STR 17 und Essom ST 342.

Die bekannten Versuchsgeräte haben den Nachteil, dass der Aufbau und Abbau wegen der Verkabelung der Stäbe und die Auswertung der Messergebnisse wegen der Eingabe des Fachwerkes aufwendig ist.

Davon ausgehend liegt der Erfindung die Aufgabe zugrunde, ein Versuchsgerät zum Durchführen von Untersuchungen an verschiedenen Fachwerken zu schaffen, das mit verringertem Aufwand den Aufbau und Abbau von verschiedenen Fachwerken und die Auswertung von Messungen an den jeweils aufgebauten Fachwerken ermöglicht.

Die Aufgabe wird durch ein Versuchsgerät gemäß Anspruch 1 gelöst. Vorteilhafte Ausführungsarten des Versuchsgerätes sind in Unteransprüchen und in der nachfolgenden Beschreibung angegeben.

Das erfindungsgemäße Versuchsgerät zum Durchführen von Untersuchungen an Fachwerken umfasst:
- einen Rahmen zum Halten eines Fachwerkes,
- Auflager zum Halten des Fachwerkes am Rahmen, die Knotenscheiben zum Verbinden mit Stäben mit wählbarer Ausrichtung der Stäbe auf die Auflager aufweisen,
- Einrichtungen zum lösbaren Halten der Auflager an verschiedenen wählbaren Positionen am Rahmen,
- Stäbe zum Bilden eines Fachwerkes,
- mindestens eine Knotenscheibe zum Verbinden von Stäben miteinander in wählbarer Ausrichtung,
- Gelenkverbindungselemente an den Knotenscheiben und den Enden der Stäbe zum gelenkigen Verbinden der Stäbe mit den Knotenscheiben,
- Kontakte für Strom und Daten an den Knotenscheiben und den Enden der Stäbe, um Strom und Daten zwischen den Knotenscheiben und den Stäben zu übertragen, wenn die Knotenscheiben mit den Stäben über die Gelenkverbindungselemente miteinander verbunden sind,
- wobei die Stäbe jeweils ein mit den Kontakten für Strom und Daten an ihren beiden Enden verbundenes Elektronikmodul zum Weiterleiten von Strom und Empfangen und Übermitteln von Daten aufweisen.

Bei dem erfindungsgemäßen Versuchsgerät werden Strom und Daten über die Knotenscheiben und die Stäbe übertragen. Zudem umfassen die Stäbe jeweils ein Elektronikmodul zum Weiterleiten von Strom und Empfangen und Übermitteln von Daten. Strom und Daten können somit über die Knotenscheiben und die Stäbe weitergeleitet werden. Mit Hilfe des Elektronikmoduls ist die Lage und Ausrichtung der Auflager, Knoten und Stäbe des Fachwerkes automatisch feststellbar. Hierfür kann eine elektronische Datenverarbeitungseinrichtung an ein paar Kontakte für Strom und Daten angeschlossen werden, um von jedem einzelnen Stab die relevanten Daten einzusammeln. Aus den eingesammelten Daten kann die elektronische Datenverarbeitungseinrichtung automatisch die Topologie des Fachwerkes ermitteln. Infolgedessen kann die Einzelverkabelung der Stäbe zum Verarbeiten von Messwerten und die individuelle Eingabe der aufgebauten Fachwerke durch den Anwender für die Auswertung der Untersuchungen entfallen. Ferner kann das Elektronikmodul für die Übertragung von Messwerten genutzt werden, die an dem Stab oder dem Auflager ermittelt werden, insbesondere für die Übertragung der Messwerte von Kräften, die auf den Stab oder das Auflager wirken. Die auf die Stäbe und die Auflager wirkenden Kräfte können für die Auswertung von Untersuchungen an Fachwerken verwendet werden. Infolgedessen können Unterrichtseinheiten besser für die Durchführung umfangreicher Messungen, Auswertung der Messergebnisse und Vermittlung von Lerninhalten genutzt werden. Gemäß einer Ausführungsart der Erfindung umfassen der Rahmen und die Auflager Kontakte zum Übertragen von Strom und Daten zwischen Rahmen und Auflager, um Strom und Daten zwischen den Auflagern und dem Rahmen zu übertragen, wenn die Auflager lösbar an dem Rahmen gehalten sind, und umfasst der Rahmen Leitungen zum Weiterleiten von Strom von einer Spannungsversorgung zu den Kontakten und Einrichtungen zum Übertragen von Daten zwischen einem PC oder einer anderen elektronischen Datenverarbeitungseinrichtung und den Kontakten. Infolgedessen können Strom und Daten dem Fachwerk über die Auflager in der jeweils gewählten Position am Rahmen ohne zusätzliche Verkabelung zugeführt werden. Auch hierdurch wird der Aufbau und Abbau des Versuchsgerätes erleichtert. Die Einrichtungen zum Übertragen von Daten können ebenfalls in Form von Leitungen ausgebildet sein. Alternativ sind die Einrichtungen zum Übertragen Einrichtungen zum drahtlosen Übertragen, beispielsweise Bluetooth oder WLAN, um die Daten drahtlos auf die elektronische Datenverarbeitungseinrichtung zu übertragen.

Falls der Rahmen keine Kontakte zum Übertragen von Strom und Daten zwischen Rahmen und Auflager aufweist, können gemäß einer alternativen Ausführungsart Strom und Daten über Kontakte an einem Auflager, einem Stab, einer Knotenscheibe oder an einem anderen Bauteil auf das Fachwerk übertragen werden.

Gemäß einer weiteren Ausführungsart ist die Spannungsversorgung und/oder die elektronische Datenverarbeitungseinrichtung außerhalb des Rahmens angeordnet. Die außerhalb des Rahmens angeordnete Spannungsversorgung und/oder Datenverarbeitungseinrichtung ist gemäß einer weiteren Ausführungsart über Steckverbindungen mit Leitungen im Rahmen zum Weiterleiten von Strom und Übertragen von Daten verbunden. Gemäß einer anderen Ausführungsart ist die Spannungsversorgung und/oder die elektronische Datenverarbeitungseinrichtung in den Rahmen integriert.

Gemäß einer weiteren Ausführungsart weisen die Auflager jeweils ein mit seinen rahmenseitigen Kontakten, d.h. den Kontakten zum Übertragen von Strom und Daten zwischen dem Auflager und dem Rahmen, und mit seinen fachwerkseitigen Kontakten, d.h. den Kontakten der Knotenscheibe des Auflagers, verbundenes Elektronikmodul zum Weiterleiten von Strom und Empfangen und Übermitteln von Daten auf. Das Elektronikmodul kann für die Ermittlung der Anordnung des Auflagers und für die Übertragung von am Auflager erfassten Messwerten genutzt werden, beispielsweise für die Übertragung von auf das Auflager wirkenden Kräften.

Gemäß einer weiteren Ausführungsart umfasst das Elektronikmodul einen Mikrocontroller, der mit den Kontakten an den beiden Enden des Stabes oder den rahmenseitigen und fachwerkseitigen Kontakten des Auflagers verbunden ist, um Daten zu empfangen, zu verarbeiten und zu übermitteln. Der Mikrocontroller kann insbesondere auf Anfrage eines PCs die Daten des Bauteils angeben, in das er integriert ist, insbesondere um welche Art von Bauteil es sich handelt (Stab oder Auflager), welche Abmessungen das Bauteil hat (z.B. Länge des Stabes), welche Bauausführung das Bauteil hat oder welche Kräfte auf das Bauteil einwirken (z.B. auf einen Stab wirkenden Zug- und Druckkräfte oder auf ein Auflager wirkende Kräfte in X- und Y-Richtung).

Gemäß einer weiteren Ausführungsart weist das Elektronikmodul verschiedene Anschlüsse auf, die mit den Kontakten an den verschiedenen Enden des Stabes oder den rahmenseitigen und den fachwerkseitigen Kontakten des Auflagers verbunden sind, wobei das Elektronikmodul eine die Anschlüsse überbrückende Anordnung aus zwei Modems und einem zwischen den Modems angeordneten Mikrocontroller umfasst. Über die Modems wird ein die Daten umfassendes Signal auf ein Trägersignal aufmoduliert bzw. durch Demodulieren des Trägersignals gewonnen. Die übermittelten Daten werden von dem Mikrocontroller verarbeitet und vom Mikrocontroller werden wiederum Daten übermittelt.

Bei den vom Mikrocontroller übermittelten Daten kann es sich um eine Antwort auf eine an das Bauteil mit diesem Elektronikmodul gerichtete Anfrage einer Datenverarbeitungseinrichtung oder um die Weiterleitung einer an ein anderes Bauteil gerichteten Anfrage an das oder die nächsten benachbarten Bauteile handeln.

Gemäß einer weiteren Ausführungsart umfasst das Elektronikmodul zwischen verschiedenen Anschlüssen, die mit den Kontakten an verschiedenen Enden des Stabes oder den rahmenseitigen und den fachwerkseitigen Kontakten des Auflagers verbunden sind, eine die Anschlüsse verbindende Verbindungsleitung mit einer Hochfrequenzsperre zum Sperren des Durchgangs von Daten über die Verbindungsleitung aufweist. Über die Hochfrequenzsperre wird der Durchgang von Daten gesperrt, sodass diese zunächst vom Mikrocontroller des Elektronikmoduls verarbeitet werden, bevor sie gegebenenfalls weitergeleitet werden. Die Hochfrequenzsperre lässt jedoch den Strom zur Versorgung von Elektronikmodulen benachbarter Stäbe oder Auflager durch, unabhängig davon, ob die ggfs. empfangenen Daten für die benachbarten Bauteile bestimmt sind oder nicht.

Gemäß einer weiteren Ausführungsart umfasst das Elektronikmodul mindestens eine Wägezelle, um mindestens eine auf den Stab oder das Auflager wirkende Kraft zu erfassen, die vorzugsweise über einen Verstärker mit dem Mikrocontroller verbunden ist. Über die Wägezelle kann eine auf den Stab oder das Auflager wirkende Zug- oder Druckkraft erfasst werden. Für den Stab reicht eine einzige Wägezelle aus, da über den Stab im Fachwerk nur Zug- und Druckkräfte übertragen werden. Gemäß einer weiteren Ausführungsart umfasst das Auflager mehrere Wägezellen, vorzugsweise eine Wägezelle, die in vertikaler Richtung gerichtete Kräfte erfasst und eine weitere Wägezelle, die in horizontaler Richtung gerichtete Kräfte erfasst, um Größe und Richtung der insgesamt auf das Auflager wirkenden Kraft zu erfassen.

Gemäß einer weiteren Ausführungsart umfasst das Elektronikmodul einen Lagesensor, der vorzugsweise über einen Verstärker mit dem Mikrocontroller verbunden ist. Über den Lagesensor kann die Ausrichtung des Stabes oder des Auflagers ermittelt werden, beispielsweise ob der Stab vertikal oder horizontal oder um 45° geneigt ausgerichtet ist. Ferner kann mittels des Lagesensors erfasst werden, ob das Auflager an einem vertikalen oder an einem horizontalen Teil des Rahmens montiert ist. Die Erfassung der Lage des Auflagers kann für die automatische Ermittlung der Topologie des vom Anwender aufgebauten Fachwerkes verwendet werden.

Gemäß einer weiteren Ausführungsart ist das Elektronikmodul eine Baueinheit, die aus verschiedenen Bauteilen besteht. Beispielsweise umfasst das Elektronikmodul mindestens eine Platine mit Elektronikbauteilen bzw. Elektronikbaugruppen (z.B. Mikrocontroller, Modems, Spulen einer Hochfrequenzsperre, Akku, Verstärker), ein Display und mindestens einen Sensor (z.B. ein DMS-Messsystem und/oder einen Lagesensor). Gemäß einer weiteren Ausführungsart ist das Elektronikmodul als Kästchen ausgebildet, das in einen Stab und/oder in ein Auflager und/oder ein anderes Bauteil eingebaut ist. Gemäß einer weiteren Ausführungsart werden für Bauteile verschiedener Art (z.B. Stäbe und Auflager) dieselben Elektronikmodule verwendet. Gemäß einer weiteren Ausführungsart umfasst das Versuchsgerät ein Mastermodul, welches ebenfalls ein Elektronikmodul mit Mikrocontroller umfasst, welches die Daten der verschiedenen Bauteile abruft und die abgerufenen Daten an einen PC oder eine andere elektronische Datenverarbeitungseinrichtung übermittelt.

Gemäß einer anderen Ausführungsart ist das Elektronikmodul eine Anordnung aus verschiedenen Bauteilen, die nicht baulich zu einer Einheit zusammengefasst sind, sondern in geeigneter Anordnung an einem Stab, einem Auflager oder einem anderen Bauteil eines Fachwerkes verteilt sind.

Gemäß einer weiteren Ausführungsart umfasst das Elektronikmodul ein Display und/oder mindestens eine mit einer Seitenlichtfaser an einer Seite des Stabes oder des Auflagers gekoppelte LED, wobei das Display und/oder die mindestens eine LED mit dem Mikrocontroller verbunden ist. Über das Display und/oder die LED kann die Intensität der auf den Stab und/oder das Auflager wirkenden Kräfte visualisiert werden. Zur Darstellung der Intensität der Kräfte werden beispielsweise RGB-LED verwendet. Bei diesen LED werden über die Einstellung der Spannung die RGB-Anteile eingestellt und dementsprechend die Farbe. Über die Farbe wird die Belastungsintensität des Bauteiles angezeigt. Dies geschieht beispielsweise so, dass für das gesamte Fachwerk die maximalen positiven und negativen Kräfte ermittelt werden (z.B. +100 bis -50 N), der ermittelten Bereiche gleichmäßig in Teilbereiche aufgeteilt wird, denen bestimmte Farbstreifen zugeordnet werden, und die Farbstreifen in die RGB-Anteile umgerechnet werden. Das Ergebnis wird an die Elektronikmodule übermittelt und von diesen wird eine Spannung an die RGB-Dioden abgegeben, die eine Farbe generiert, die der Höhe der jeweiligen Kraft im Bauteil entspricht.

Gemäß einer weiteren Ausführungsart weisen die Gelenkverbindungselemente Schnappelemente zum Verschnappen der Stäbe mit den Knotenscheiben auf, wenn die Gelenkverbindungselemente miteinander verbunden werden. Hierdurch werden Aufbau und Abbau des Versuchsgerätes weiter vereinfacht.

Gemäß einer weiteren Ausführungsart weisen die Auflager Klemmeinrichtungen zum Festklemmen am Rahmen auf. Mittels der Klemmeinrichtungen können Aufbau und Abbau des Versuchsgerätes weiter vereinfacht werden. Gemäß einer weiteren Ausführungsart weisen die Auflager nach außen vorstehende, verlagerbare Pilze und der Rahmen Schlüssellochkonturen zum Verankern der Pilze auf, wobei die Auflager Spanneinrichtungen umfassen, um die Pilze teilweise in die Auflager hineinzuziehen und die Auflager am Rahmen festzuklemmen. Hierbei können die Auflager einfach durch Einsetzen der Pilze in die Schlüssellochkonturen, Verlagern der Pilze in den schmalen Bereich der Schlüssellochkonturen und Festklemmen der Ränder des schmalen Teils der Schlüssellochkonturen zwischen den Pilzen und dem Auflager fixiert werden.

Gemäß einer weiteren Ausführungsart sind die rahmenseitigen Kontakte für Strom und Daten an den Auflagern und die Kontakte für Strom und Daten am Rahmen so angeordnet, dass diese Kontakte einander kontaktieren, wenn das Auflager an definierten Positionen am Rahmen lösbar gehalten ist. Dadurch, dass die Auflager nur an definierten Positionen angebracht werden können, wird die Ermittlung der Topologie des jeweils aufgebauten Fachwerkes weiter erleichtert.

Gemäß einer weiteren Ausführungsart weisen die Kontakte zum Übertragen von Strom und Daten einen Massekontakt und einen gegenüber Masse isolierten Kontakt auf und/oder weisen die Knotenscheiben, die Stäbe, die Auflager und/oder der Rahmen eine durch einen metallischen Körper der Knotenscheiben, Stäbe, Auflager und/oder Rahmen gebildete Leitung und eine isolierte elektrische Leitung zum Übertragen von Strom und Daten auf. Bei dieser Ausführungsart erfolgt die Übertragung von Strom und elektrischen Daten über eine isolierte elektrische Leitung bzw. ein isoliertes Kabel und über einen metallischen Körper der verschiedenen Bauteile. Hierdurch wird baulicher Aufwand eingespart und die Sicherheit der Versorgung der verschiedenen Bauteile mit Strom und Daten erhöht.

Eine weitere Ausführungsart umfasst mindestens einen Stab mit einer integrierten Belastungseinrichtung und/oder mindestens einen Stab mit integriertem Gewicht zum Aufbringen einer Belastung auf das Fachwerk. Gemäß einer weiteren Ausführungsart umfasst der Stab mit der integrierten Belastungseinrichtung und/oder dem integrierten Gewicht ein Elektronikmodul. Gemäß einer weiteren Ausführungsart umfasst der Stab mit der integrierten Belastungseinrichtung und/oder dem integrierten Gewicht ein Elektronikmodul zur Anzeige der von dem Stab übertragenen Kraft.

Eine weitere Ausführungsart umfasst eine Abstandsmesseinrichtung einen Basiskörper zum lösbaren Halten am Rahmen und Übertragen von Strom und Daten, eine Spanneinrichtung zum Festklemmen des Basiskörpers am Rahmen und einen mit dem Basiskörper verbundenen Näherungssensor zum Messen eines Abstandes eines Objektes vom Näherungssensor. Mittels des Näherungssensors kann die Verformung des Fachwerkes ermittelt werden, beispielsweise die Verformung an einem Ende eines Stabes bzw. an einem Knotenpunkt. Über das Elektronikmodul können die Messwerte an eine elektronische Datenverarbeitungseinrichtung zur Verarbeitung weitergeleitet werden. Der Stab mit dem integrierten Näherungssensor ist gemäß einer weiteren Ausführungsart über ein Auflager am Rahmen befestigt. Hierfür kann der Stab am anderen Ende Gelenkverbindungselemente und Kontakte zum Verbinden mit der Knotenscheibe eines Auflagers aufweisen. Alternativ ist dieser Stab einteilig mit einem Auflager ausgebildet und ist das Elektronikmodul mit rahmenseitigen Kontakten zur Übermittlung von Strom und Daten des Auflagers verbunden.

Gemäß einer weiteren Ausführungsart umfasst das Versuchsgerät mehrere Stäbe mit verschiedenen Längen. Dies ermöglicht den Aufbau einer größeren Anzahl unterschiedlicher Fachwerke. Gemäß einer weiteren Ausführungsart sind verschiedene Gruppen von Stäben vorhanden, wobei die Stäbe in den jeweiligen Gruppen übereinstimmende Längen aufweisen und die Stäbe verschiedener Gruppen unterschiedliche Längen aufweisen. Dies kann für den Aufbau von Fachwerken mit sich wiederholenden Bauteilen verwendet werden. Gemäß einer weiteren Ausführungsart ist eine erste Gruppe aus ersten Stäben mit übereinstimmender Länge und eine zweite Gruppe aus zweiten Stäben mit übereinstimmender Länge vorhanden, wobei die zweiten Stäbe eine um das √2-fache größere Länge als die ersten Stäbe aufweisen. Dies kann für den Aufbau von Fachwerken aus vertikalen, horizontalen und diagonalen Stäben verwendet werden.

Gemäß einer weiteren Ausführungsart umfasst das Versuchsgerät Stäbe mit einstellbarer Länge. Mittels Stäben mit einstellbarer Länge können insbesondere überbestimmte Fachwerke untersucht werden. Die Länge des Stabes kann so eingestellt werden, dass keine Kraft oder eine mehr oder weniger große Zug- oder Druckkraft über diesen Stab übertragen wird.

Eine weitere Ausführungsart umfasst einen PC, Laptop, Smartphone, Tablet oder eine andere elektronische Datenverarbeitungseinrichtung, die eine Software aufweist, die ausgebildet ist, Daten an bestimmte Elektronikmodule auszusenden, von den bestimmten Elektronikmodulen zurückgesandte Daten zu empfangen, aus den empfangenen Daten die Lage der Stäbe, der Knotenscheiben und/oder der Auflager des Fachwerks zu ermitteln oder auf die verschiedenen Stäbe und/oder Auflager des Fachwerks wirkenden Kräfte zu ermitteln und die ermittelten Ergebnisse mittels eines Displays, eines Druckers oder einer anderen Ausgabeeinrichtung auszugeben und/oder zu speichern. Mittels der elektronischen Datenverarbeitungseinrichtung kann die Topologie des jeweils aufgebauten Fachwerks automatisch ermittelt und/oder die Messwerte automatisch ausgewertet und die Ergebnisse der Auswertung ausgegeben werden.

Die Erfindung wird nachfolgend anhand der anliegenden Zeichnungen von Ausführungsbeispielen näher erläutert. In den Zeichnungen zeigen:
- Fig. 1: das Versuchsgerät mit einem Laptop für die Ermittlung der Topologie des Fachwerks und Darstellung von Messergebnissen in einer Perspektivansicht schräg von vorn und von der Seite;
- Fig. 2: Rahmen des Versuchsgerätes in einer vergrößerten Detailansicht;
- Fig. 3: Rahmenteil des Rahmens in einer vergrößerten Perspektivansicht schräg von vom und von der anderen Seite;
- Fig. 4: Auflager des Versuchsgerätes in einer vergrößerten Perspektivansicht von vorn;
- Fig.5: das Auflager in einer vergrößerten Perspektivansicht von hinten;
- Fig. 6 a, b: Lagerblock mit Wägezellen des Auflagers in einer Seitenansicht (Fig. 6a) und Wägezelle in einer Perpektivansicht (Fig. 6b);
- Fig. 7: Stab des Versuchsgerätes in einer vergrößerten Perspektivansicht schräg von vorn;
- Fig. 8 a, b: der Stab in einer perspektivischen Teilansicht (Fig. 8a) und mit teilweise weggelassenen Gehäuse in derselben Perspektivansicht (Fig. 8b);
- Fig. 9: Elektronikmodul des Stabs in einer vergrößerten Teilansicht;
- Fig. 10 a,b: der Stab in einem perspektivischen Sprengbild von vom (Fig 10a) und von hinten (Fig. 10b);
- Fig. 11: Blockschaltbild des Elektronikmoduls;
- Fig. 12 a-c: eine Knotenscheibe des Versuchsgerätes einer Perspektivansicht von vom (Fig. 12a), von hinten (Fig. 12b) und in einem perspektivischen Sprengbild (Fig. 12c);
- Fig. 13: gelenkig mit der Knotenscheibe verbundene Stäbe in einer Perspektivansicht von vorn;
- Fig. 14a, b: Belastungseinrichtung mit Scherengetriebe in einer Perspektivansicht von vom (Fig. 14a) und von hinten (Fig. 14b);
- Fig. 15: das Versuchsgerät mit einem anderen Fachwerk in einer Perspektivansicht;
- Fig. 16 a-c: einen kürzeren Stab in einer Perspektivansicht von vorn (Fig. 16a), in einer Perspektivansicht von hinten (Fig. 16b) und verbunden mit zwei Knotenscheiben in einer Perspektivansicht von vom (Fig. 16c);
- Fig. 17: eine Abstandsmesseinrichtung Auflager mit einem Näherungssensor in einer Perspektivansicht von vorn;
- Fig. 18a, b: einen Stab mit einstellbarer Länge in einer Perspektivansicht von vom (Fig. 18a) und mit abgetrennter Stabverlängerung in einer vergrößerten Teilansicht (Fig. 18b);
- Fig. 19a-c: das Versuchsgerät mit einer Versuchsanordnung zur Untersuchung einer Hängebrücke in einer Perspektivansicht von vom (Fig. 19a) und in vergrößerten Teilansichten (Fig. 19b und c);
- Fig. 20a-d: Elektronikmodul mit Gewicht der Versuchsanordnung von Fig. 19 in Perspektivansichten von oben (Fig 20a) und von unten (Fig. 20b) und ohne Gehäuse in Perspektivansichten von oben (Fig. 20c) und von unten (Fig. 20d).

In der vorliegenden Anmeldung beziehen sich die Angaben "oben" und "unten" sowie davon abgeleitete Angaben wie "darüber" und "darunter" auf eine Anordnung des Rahmens auf einem horizontalen Untergrund in einer vertikalen Ebene und des Fachwerkes innerhalb der vertikalen Ebene. Bauteile mit übereinstimmender Bezeichnung, die mehr oder weniger unterschiedlich ausgebildet sind, werden nachfolgend mit denselben führenden Bezugsziffern, einem nachfolgenden Punkt und individuellen Bezugsziffern hinter dem Punkt bezeichnet.

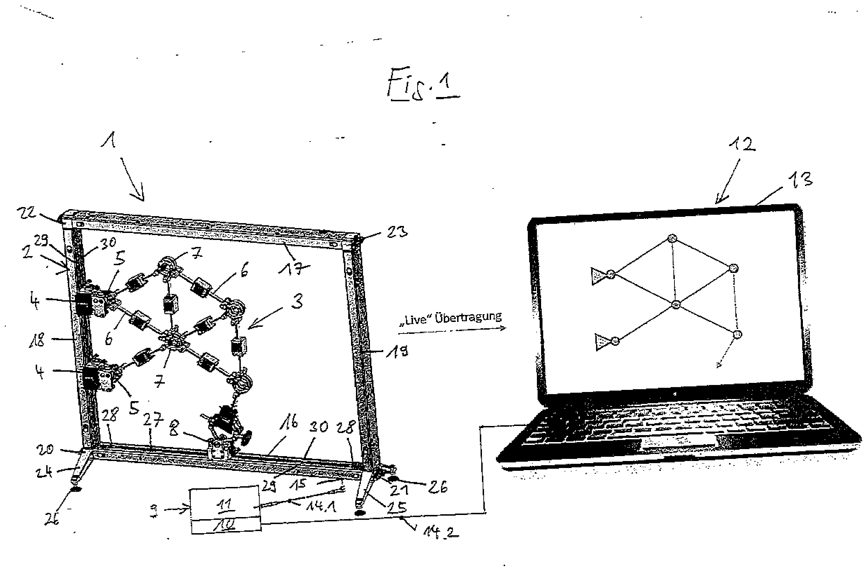

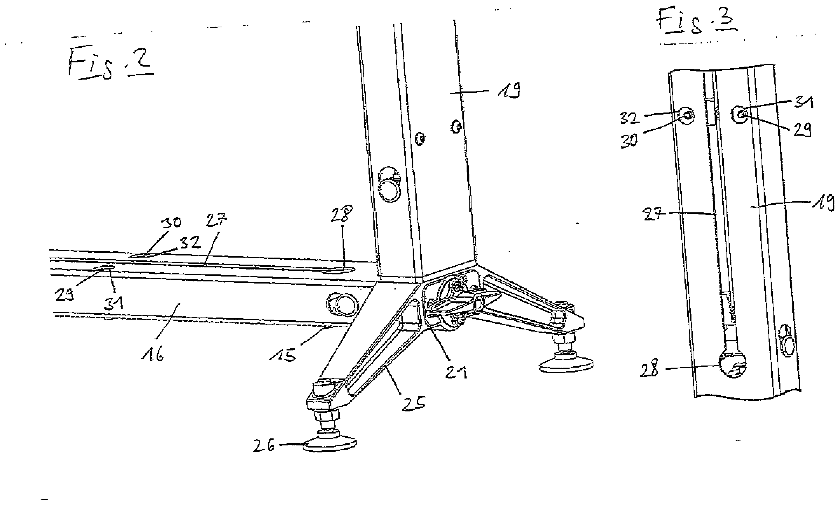

Gemäß Fig. 1 bis 3 weist das Versuchsgerät 1 einen Rahmen 2 zum Halten eines Fachwerkes und ein in dem Rahmen gehaltenes Fachwerk 3 auf. Das Fachwerk 3.1 umfasst lösbar an dem Rahmen 2 gehaltene Auflager 4 mit integrierten Knotenscheiben 5, gelenkig mit den Auflagern 4 verbundene Stäbe 6, separate Knotenscheiben 7, über die die Stäbe 6 des Fachwerkes 3.1 gelenkig miteinander verbunden sind, und eine am Rahmen 2 lösbar gehaltenen Belastungseinrichtung 8.

Zudem umfasst das Versuchsgerät ein Mastermodul 9, das eine Spannungsversorgung 10 der Versuchsanordnung und ein Elektronikmodul 11 zur Sammlung und Weiterleitung von Daten zwischen einem Auflager 4 und einer Datenverarbeitungseinrichtung aufweist.

Ferner umfasst das Versuchsgerät 1 eine Datenverarbeitungseinrichtung 12 in Form eines Laptops 13 zum Ermitteln der Topologie des Fachwerkes 3.1 und Verarbeitung bzw. Darstellung von Messergebnissen. Das Mastermodul 9 ist über ein elektrisches Verbindungskabel 14.1 an eine Buchse 15 des Rahmens 2 und der Laptop 13 ist über ein elektrisches Verbindungskabel 14.2 an das Mastermodul angeschlossen, um die Versuchsanordnung mit elektrischem Strom zu versorgen und Daten bzw. ein mit einem Datensignal moduliertes Trägersignal zu übertragen.

Der Rahmen 2 ist ein Rechteck mit zwei längeren horizontalen Rahmenteilchen 16, 17 und zwei kürzeren vertikalen Rahmenteilen 18, 19 in Form von Kastenprofilen aus Metall.

An den Ecken weist der Rahmen kastenförmige Eckverbinder 20 bis 23 aus Metall auf, die jeweils über rechtwinklig zueinander ausgerichtete Steckzapfen in den endseitigen Öffnungen der Kastenprofile verankert sind. Die unteren Eckverbinder 20, 21 sind jeweils mit einem Standfuß 24, 25 verbunden, die jeweils von beiden Seiten der durch den Rahmen 2 definierten Ebene nach außen vorstehende Ausleger und an den äußeren Enden der Ausleger nach unten vorstehende Stelltteller 26 für einen Niveauausgleich haben.

Die Rahmenteile 16 bis 19 weisen jeweils an den Innenseiten eine in Längsrichtung des Rahmenteiles 16 bis 19 verlaufende Nut 27 mit Schlüssellochkonturen 28 an den beiden Enden auf. Die Rahmenteile 16 bis 19 haben jeweils an den Innenseiten in Längsrichtung zueinander versetzte Paare aus jeweils zwei Kontakten 29, 30, die beidseitig der Nut 27 angeordnet sind. Jeder Kontakt 29, 30 ist durch eine Bohrung 31, 32 an der Innenseite des Rahmens 2 hindurch von außen zugänglich. Die Bohrungen 31, 32 sind zugleich Rastpunkte für die Lagefixierung von Auflagern 4. Insgesamt weist der Rahmen 12 Paare mit jeweils zwei Kontakten 29, 30 und Bohrungen 31, 32 auf. Die Kontakte 29, 30 sind durch kleine Scheiben oder Stifte aus Metall gebildet, die an einem isolierenden Kunststoffkörper angeordnet sind, der in dem Rahmenteil 16 bis 19 fixiert ist.

Sämtliche Kontakte 29, 30 sind durch ein durch die Rahmenteile 16 bis 19 und die Eckverbinder 20 bis 23 hindurch verlaufendes Kabel miteinander verbunden und an einen Kontakt der Buchse 15 an der Unterseite des unteren horizontalen Rahmenteiles 16 angeschlossen. Ein weiterer Kontakt der Buchse 15 ist an den metallischen Rahmen 2 angeschlossen.

Vorzugsweise wird der Pluspol der Spannungsversorgung 10 an die Kontakte 29, 30 angelegt und der Minuspol an den leitfähigen Rahmen 2.

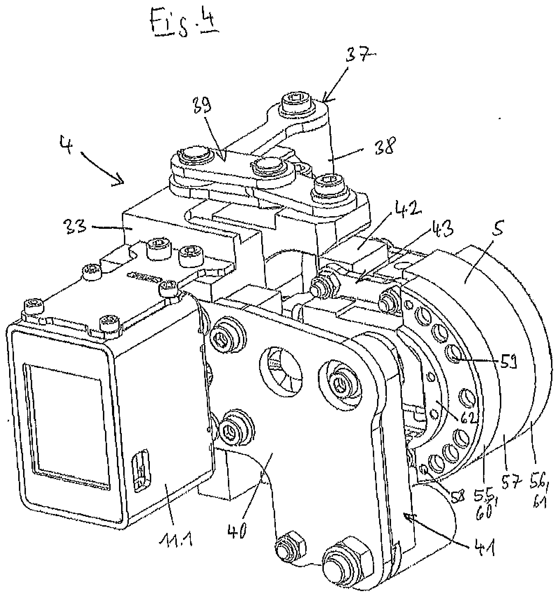

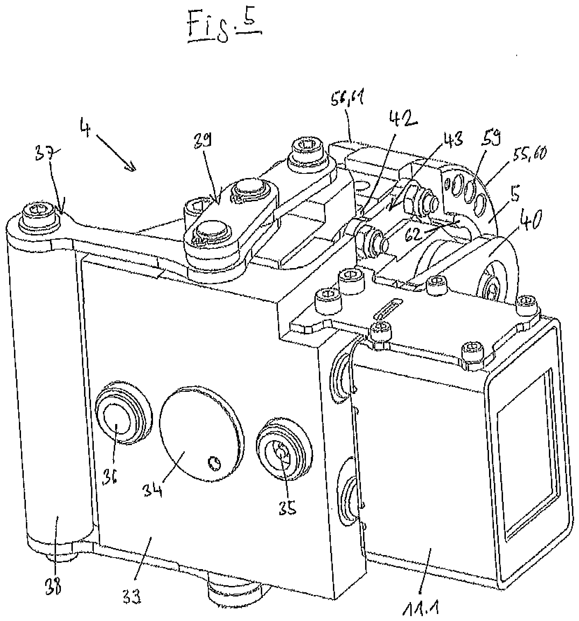

Gemäß Fig. 4 und 5 weist ein Auflager 4 einen kastenförmigen Basiskörper 33 aus Metall auf, der auf einer Seite einen nach Außen vorstehenden Pilz 34 und zwei vorstehende Kontakte 35, 36 für Strom und Daten auf beiden Seiten des Pilzes 34 aufweist. Die Kontakte 35, 36 sind gegenüber dem Basiskörper 33 isoliert. Die Kontakte 35, 36 an dem Basiskörper 33 sind die rahmenseitigen Kontakte des Auflagers 4. Der Pilz 34 ist tiefer in den Basiskörper 33 hinein verlagerbar. Zum Verlagern des Pilzes 34 weist das Auflager 4 eine Spanneinrichtung 37 mit einem schwenkbaren Spannhebel 38 und einem Getriebe 39 zum Übertragen der Schwenkbewegung des Spannhebels 38 auf eine axiale Verlagerung des Pilzes 34 auf.

An dem Basiskörper 33 ist seitlich eine Trägerplatte 40 des Auflagers 4 befestigt. An der Trägerplatte 40 ist über ein erstes Parallelogrammgetriebe 41 mit vertikalen Hebeln ein Lagerblock 42 gelagert. Das erste Parallelogrammgetriebe 41 ermöglicht eine Verlagerung des Lagerblockes 42 in X-Richtung bzw. in horizontaler Richtung zum Basiskörper 33.

An dem Lagerblock 42 ist über ein zweites Parallelogrammgetriebe 43 mit horizontalen Hebeln eine im Wesentlichen halbkreisringförmige Knotenscheibe 5 gelagert. Das zweite Parallelogrammgetriebe 43 ermöglicht eine Verlagerung der Knotenscheibe 5 in Y-Richtung bzw. in vertikaler Richtung zum Lagerblock 42.

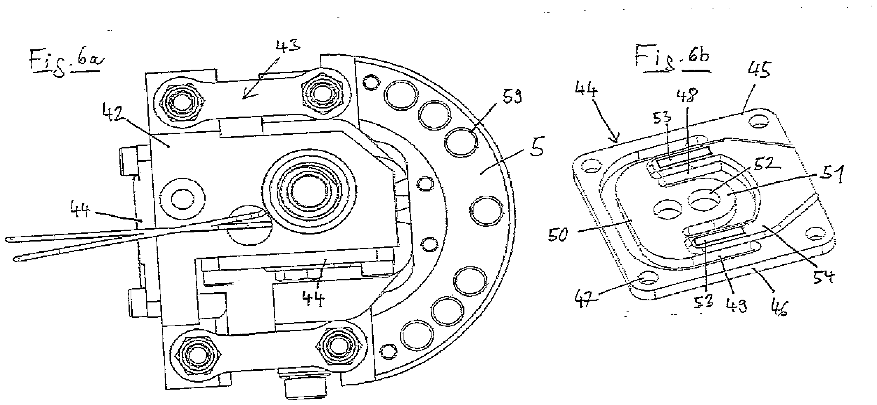

Gemäß Fig. 6a ist an einer vertikalen Seite des Lagerblockes 42 ist eine erste Wägezelle 44 befestigt und an einer horizontalen Seite des Lagerblockes eine zweite Wägezelle 44. Die Wägezellen 44 umfassen gemäß Fig. 6b jeweils ein Stanzteil 45 aus Blech, das einen rechteckigen Rahmen 46 mit Löchern 47 an den Ecken, vom inneren Rand des Rahmens 46 vorstehende, parallele Biegebalken 48, 49 und an einer Brücke 50 zwischen den Enden der beiden Biegebalken 48, 49 eine nach Innen vorstehende Lasche 51 mit weiteren Löchern 52 aufweist. Auf den Biegebalken 48, 49 ist jeweils ein DMS-Messsystem 53 in einer Verkapselung 54 angeordnet. Die erste Wägezelle 44 kontaktiert ein horizontales, fest mit dem Basiskörper 33 verbundenes Druckelement und die zweite Wägezelle 44 ein vertikales, fest mit einer Knotenscheibe 5 verbundenes Druckelement. Eine auf die Knotenscheibe 5 in horizontaler Richtung drückende Kraft ist somit mittels der ersten Wägezelle 44 erfassbar und eine auf die Knotenscheibe 5 in vertikaler Richtung wirkende Kraft mittels der zweiten Wägezelle 44.

Die Knotenscheibe 5 umfasst gemäß Fig. 4 und 5 drei übereinanderliegenden Scheiben 55, 56, 57, wobei die beiden äußeren Scheiben 55, 56 jeweils aus Metall und die innere Scheibe 57 aus isolierendem Kunststoff besteht. Die Scheiben 55 bis 57 sind mittels Schrauben 58 miteinander verbunden, die von verschiedenen Seiten durch Bohrungen in den beiden äußeren Scheiben 55, 56 hindurch in Gewindeeinsätze eingeschraubt sind, die in die innere Scheibe 57 aus isolierendem Kunststoff eingesetzt sind. Die beiden äußeren Scheiben 55, 56 weisen auf den beiden voneinander abgewandten Seitenflächen jeweils eine Serie von Sackbohrungen 59 auf, die denselben Abstand vom Mittelpunkt der Knotenscheibe 5 haben. Die äußeren Scheiben 55, 56 sind die Kontakte 60, 61 der Knotenscheibe 5. Die Kontakte 60, 61 der Knotenscheibe 5 sind die fachwerkseitigen Kontakte des Auflagers 4.

Die auf der Vorderseite der Knotenscheibe 44 angeordnete äußere Scheibe 55 weist eine nach außen vorstehende Stufe 62 in Form eines Ringes um den Mittelpunkt der Scheibe 55 auf. Die Scheibe 56 auf der Rückseite nicht.

Das Auflager 4 weist ein Elektronikmodul 11.1 auf. Das Elektronikmodul 11.1 ist auf einer Seite über eine Leitung mit den beiden rahmenseitigen Kontakten 35, 36 und über eine weitere Seite mit dem Basiskörper 33 (Masse) des Auflagers 4 verbunden. Auf der anderen Seite ist das Elektronikmodul 11.1 über eine Leitung mit der vorderen Scheibe 55 (Masse) und über eine weitere Leitung mit der hinteren Scheibe 56 der Knotenscheibe 5 verbunden, d.h. mit dem fachwerkseitigen Kontakten 60, 61. Ferner ist das Elektronikmodul 11.1 mit den DMS-Sensoren 53 auf den beiden Wägezellen 44 verbunden.

Das Elektronikmodul 11.1 kann die auf das Auflager 4 in X- und Y-Richtung wirkenden Kräfte und die Ausrichtung des Auflagers 4 an den Laptop 13 weiterleiten.

Einzelheiten des Elektronikmoduls 11.1 werden weiter unten erläutert.

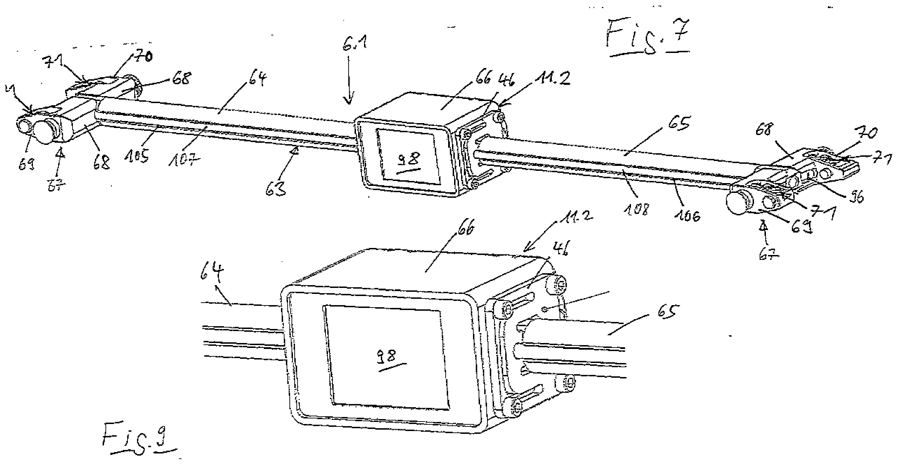

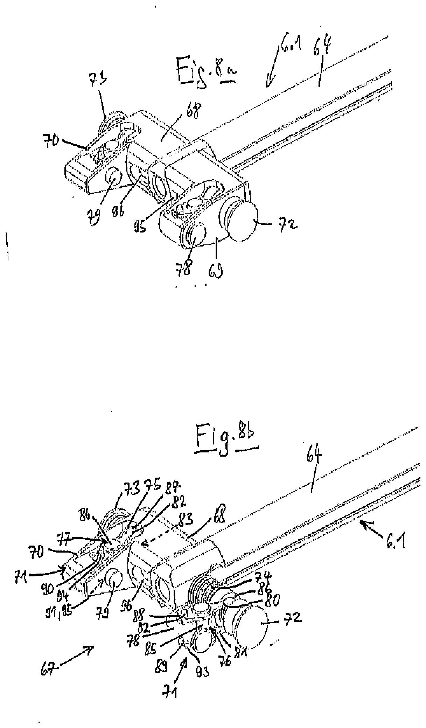

Gemäß Fig. 7 und 8 umfasst ein Stab 6.1 ein Rohr 63 aus Metall mit zwei Rohrstücken 64, 65, die an den Stirnseiten eines Gehäuses 66 in Form eines Kästchens eines Elektronikmoduls 11.2 befestigt sind. An den äußeren Enden sind die Rohrstücke 64, 65 mit jeweils mit einem Gelenkverbindungselement 67 in Form eines Gabelkopfes verbunden. Jedes Gelenkverbindungselement 67 umfasst eine Traverse 68, die senkrecht zum Rohrstück 64, 65 angeordnet und mit dem Ende des Rohrstücks 64, 65 verbunden ist. Ferner umfasst das Gelenkverbindungselement 67 zwei Schenkel 69, 70, die von der auf der vom Rohrstück 64, 65 abgewandten Seite von den Enden der Traverse 68 vorstehen. Ein Schenkel 69 ist etwas kürzer als der Schenkel 70 ausgebildet. Die beiden Gelenkverbindungselemente 67 an den äußeren Enden des Stabes 6 weisen die kurzen Schenkel 69 auf derselben Seite des Stabes 6.1 auf.

Jedes Gelenkverbindungelement 67 umfasst einen Schnappmechanismus 71, der zwei von den Enden der Traverse 68 nach Außen vorstehende Knöpfchen 72, 73 aufweist. Jedes Knöpfchen 72, 73 wird von einer in der Traverse 68 abgestützten Schraubenfeder 74, 75 bis zu einem Anschlag nach außen gedrückt.

Die Knöpfchen 72, 73 sind jeweils über eine Hebelmechanik 76, 77 mit Bolzen 78, 79 aus einem elektrisch leitfähigen Material gekoppelt. Jede Hebelmechanik 76, 77 umfasst zwei zweiarmige Hebel 80-83, die an einer Welle 85, 86 befestigt sind. Die beiden Hebel 80-83 greifen mit den benachbarten Enden auf der einen Seite in eine Ringnut 86, 87 am Umfang des Knöpfchens 72, 73 ein und nehmen in Bohrungen 88-91 an ihren anderen Enden radial von den Bolzen 78, 79 vorstehende Zapfen 92-94 auf.

Auf der Seite mit den längeren Schenkeln 69 sind die Bolzen 79 isolierend in den Gelenkverbindungselementen 67 gelagert und elektrisch über ein durch den Stab 6.1 hindurchlaufendes Kabel miteinander verbunden. Die Bolzen 78 in den kürzeren Schenkeln 69 sind über die kürzeren Schenkel 69, die Traverse 68 und das Rohr 63 aus leitfähigem Material miteinander bzw. mit Masse elektrisch verbunden.

Auf der von dem Rohr 63 abgewandten Seite weisen die Traversen 68 zwischen den beiden Schenkeln 69, 70 zwei Vertiefungen 95, 96 auf, die symmetrisch bezüglich der Längsachse des Rohres 63 angeordnet sind.

Wenn die Knöpfchen 72, 73 bis zum Anschlag aus den Enden der Traverse 68 hinausstehen, stehen die Bolzen 78, 79 maximal von den beiden Schenkeln 69, 70 nach innen vor. Durch Drücken der beiden Knöpfchen 72, 73 in die Traverse 68 hinein werden die Bolzen 78, 79 mithilfe der Hebelmechaniken 76, 77 in die Schenkel 69, 70 hinein verlagert. In der nach innen verlagerten Stellung ist das Gelenkverbindungselement 67 radial auf die Knotenscheibe 5 des Auflagers 4 aufschiebbar, sodass die Knotenscheibe 5 zwischen die beiden Schenkel 69, 70 hineinragt. Wenn der kurze Schenkel 69 auf der Seite der Knotenscheibe 5 mit der ringförmigen Stufe 61 ausgerichtet ist, kann die Gelenkverbindung mit den Bolzen 78, 79 auf die Sackbohrungen 59 der Knotenscheibe 5 ausgerichtet werden und sind die Bolzen 78, 79 durch entlasten der Knöpfchen 72, 73 und die Rückstellwirkung der Schraubenfedern 74, 75 in die Sackbohrungen 59 einschnappbar. Diese Verbindung der Knotenscheibe 5 mit dem Stab 6.1 ist gelenkig, sodass der Stab 6.1 bezüglich der Knotenscheibe 5 schwenkbar ist. Durch das Eingreifen der Bolzen 78, 79 in die Sackbohrungen 59 sind die Knotenscheibe 5 und der Stab 6.1 elektrisch miteinander verbunden. Durch die Ausrichtung des Gelenkverbindungselementes 67 auf die Knotenscheibe 5 des Auflagers 4 wird ein Verpolungsschutz erreicht.

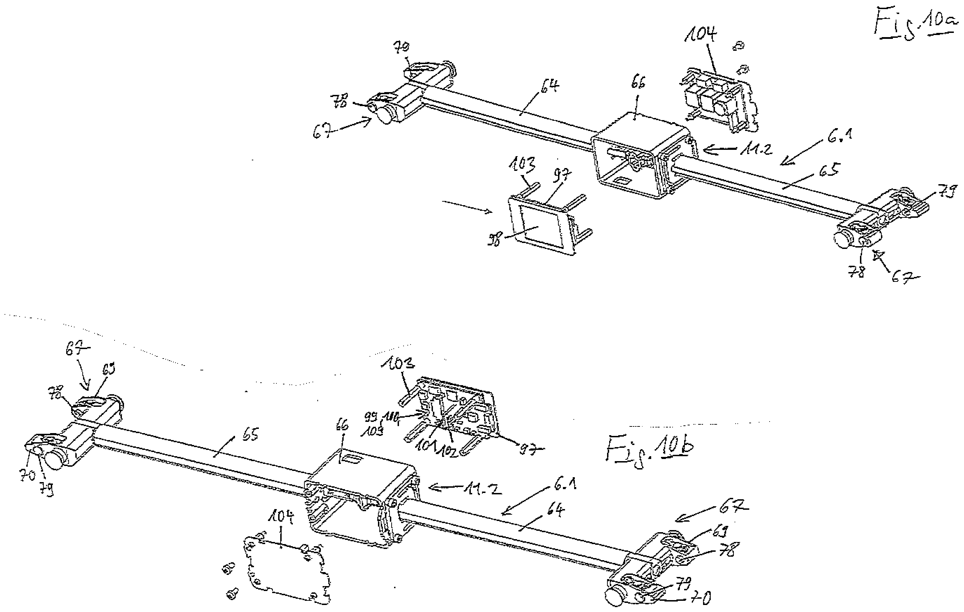

Gemäß Fig. 9 und 10 trägt das Gehäuse 66 des Elektronikmoduls 11 auf einer Seite eine Wägezelle 44, die wie die Wägezelle 44 des Auflagers 4 ausgebildet ist. Der Rahmen 46 der Wägezelle 44 ist an den Löchern 48 auf einer Seite des Gehäuses 66 fixiert. Das innere Ende des einen Rohrstücks 65 ist mittels einer durch die Bohrungen durchgeführten Schraube an der Lasche 51 der Wägezelle 44 befestigt. Das innere Ende des anderen Rohrstücks 64 ist direkt an der Wand des Gehäuses 66 befestigt.

Das Elektronikmodul 11.2 umfasst eine Bildschirmplatine 97, die auf der Außenseite einen Bildschirm 98 (z.B. Ein TFT-Display) und auf der Innenseite Verstärker 99, einen Mikrocontroller 100 und RGB-LEDs 101, 102 trägt. Von der Innenseite der Bildschirmplatine 97 stehen an den Ecken Stifte 103 mit einem Innengewinde vor. Die Bildschirmplatine 97 ist mit den Stiften 103 in das Gehäuse 66 eingesetzt und schließt dieses auf einer Seite ab.

Auf der anderen Seite des Gehäuses 66 befindet sich eine Platine 104 für Kommunikation, die Elektronikbauteile auf der Innenseite trägt. Die Platine 104 für Kommunikation schließt das Gehäuse 66 auf der anderen Seite ab und ist mit den Stiften 103 der Bildschirmplatine 97 verschraubt.

Die Platinen 97, 104 sind miteinander und mit den Bolzen 79 an den langen Schenkeln 70 der beiden Gelenkverbindungselemente 67 verkabelt. Ferner sind sie über das elektrisch leitfähige bzw. metallische Gehäuse 66 und die Rohrstücke 64, 65 elektrisch mit den Bolzen 78 an den kurzen Schenkeln 69 verbunden.

Die beiden Rohrstücke 64, 65 haben jeweils auf der Seite des Bildschirmes 98 am Umfang eine in Längsrichtung des Rohrstücks 64, 65 verlaufende Nut 105, 106, in die eine Seitenlichtfaser 107, 108 eingesetzt ist. Jede Seitenlichtfaser 107, 108 ist durch die Wand des Gehäuses 66 hindurch in das Gehäuse 66 hinein geführt und optisch mit einer der beiden RGB-LEDs 101, 102 gekoppelt.

Die DMS-Messsysteme 53 sind über Kabel mit der Bildschirmplatine 97 bzw. den Verstärkern 99 verbunden.

Ferner ist auf der Bildschirmplatine 97 ein Lagesensor 109 angeordnet, der die Neigung des Stabes 6 zur Vertikalen ermittelt. Die Bauteile der Elektronik sind auf der Bildschirmplatine 97 bzw. auf der Platine 104 angeordnet.

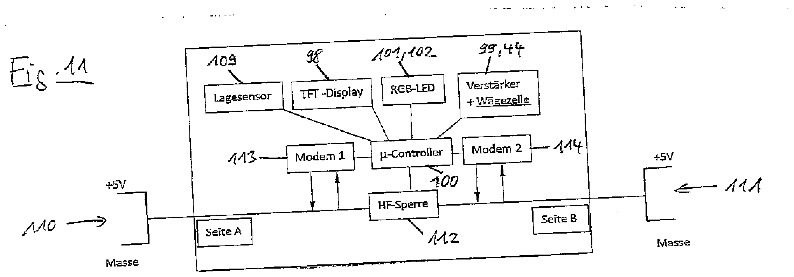

Gemäß Fig. 11 weist die Elektronik des Elektronikmoduls 11 Anschlüsse 110, 111 auf zwei Seiten auf. Auf jeder Seite ist die Elektronik mit dem Bolzen 79 an dem langen Schenkel 70 und mit dem Rohrstück 64, 65 auf einer Seite des Elektronikmoduls 11 verbunden. Somit sind die beiden Seiten des Elektronikmoduls 11 an die Kontakte für Strom und Daten an den beiden Gelenkverbindungselementen 67 des Stabes angeschlossen.

Die Elektronik weist eine die beiden Seiten verbindende Verbindungsleitung mit einer Hochfrequenzsperre 112 zum Blockieren des Durchganges von Daten und Weiterleiten des Stromes durch die Verbindungsleitung auf.

Ferner umfasst die Elektronik eine die beiden Seiten überbrückende Anordnung aus zwei Modems 113, 114 und einem zwischen den Modems angeordneten Mikrocontroller 100. Der Microcontroller 100 ist mit dem Bildschirm 98, den RGB-LED 101, 102 und über die Verstärker 99 mit der Wägezelle 44 und dem Lagesensor 109 verbunden.

Das Elektronikmodul 11.1 des Auflagers 4 ist wie das Elektronikmodul 11.2 des Stabes 6.1 ausgebildet. Anstatt mit den Bolzen 78, 79 der beiden Gelenkverbindungselemente 67 sind die beiden Seiten des Elektronikmoduls 11 des Auflagers 4 mit den rahmenseitigen Kontakten 35, 36 und mit den fachwerkseitigen Kontakten 60, 61 elektrisch verbunden.

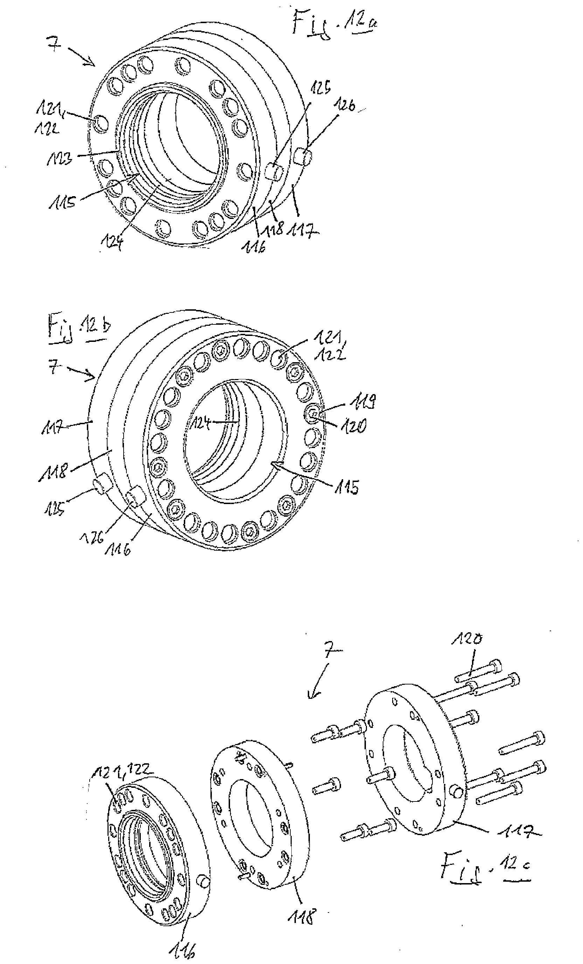

Gemäß Fig. 12 umfasst das Versuchsgerät 1 Knotenscheiben 7, die als Kreisringscheiben mit einem zentralen Loch 115 ausgebildet sind. Die Knotenscheiben 7 weisen jeweils zwei äußere Scheiben 116, 117 aus Metall und eine innere Scheibe 118 aus einem isolierenden Kunststoff auf. Die äußeren Scheiben 116, 117 und die innere Scheibe 118 sind von axialen Bohrungen 119 durchsetzt und durch Schrauben 120 zusammengehalten, die von verschiedenen Seiten durch Bohrungen in den äußeren Scheiben 116, 117 hindurch in Gewindeeinsätze hineingeschraubt sind, die in die innere Scheibe 118 aus isolierendem Kunststoff eingesetzt sind. Die äußeren Scheiben 116, 117 weisen auf den voneinander abgewandten Außenseiten Sackbohrungen 121 auf, die in Umfangsrichtung verteilt auf dem gleichen Radius um den Mittelpunkt der Knotenscheibe 7 angeordnet sind. Die Sackbohrungen 121 sind Gelenkverbindungselemente 122 der Knotenscheibe 7. Die äußere Scheibe 116 weist eine ringförmige Stufe 123 auf einer Seite auf und ist auf der Innenseite mit einer feinen Rille 124 versehen. Die andere Scheibe 117 ist ohne die äußere Stufe ausgebildet. Am Außenumfang weisen die äußeren Scheiben 116, 117 zwei radial nach außen vorstehende, parallele Stifte 125, 126 auf.

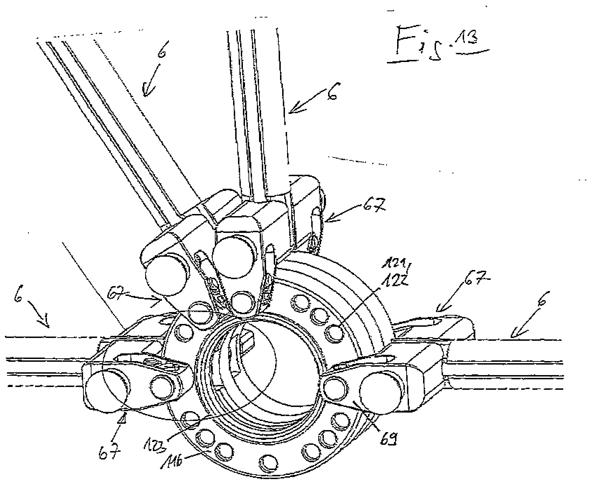

Gemäß Fig. 13 sind zwei oder mehr Stäbe 6 und die Knotenscheibe 7 über ihre Gelenkverbindungselemente 67, 122 miteinander gelenkig und elektrisch verbunden. Ein Verpolungsschutz ist dadurch gewährleistet, dass die Gelenkverbindungselemente 67, 112 nur bei Ausrichtung des kurzen Schenkels 69 auf die Scheibe 116 mit der ringförmigen Stufe 123 mit der Knotenscheibe 7 verbindbar sind. Durch Einsetzen der Stifte 125, 126 in die Vertiefungen 95, 96 an der Traverse 68 eines der Gelenkverbindungselemente 67 kann ein spiralförmiges Verdrehen der Knotenscheibe 7 verhindert werden.

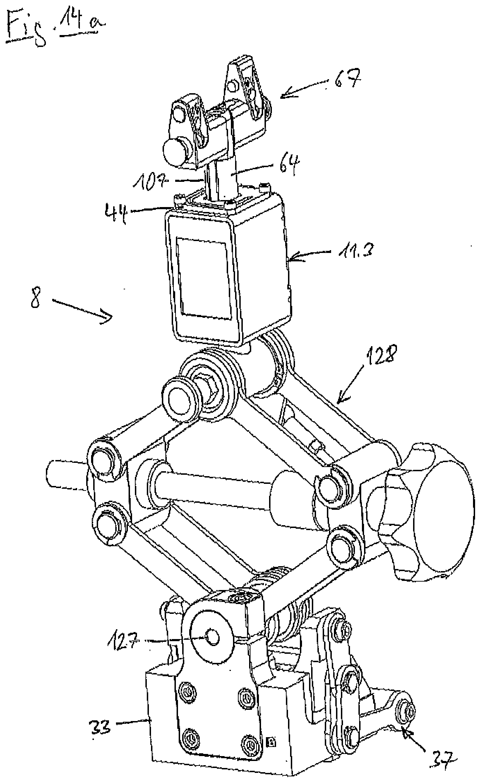

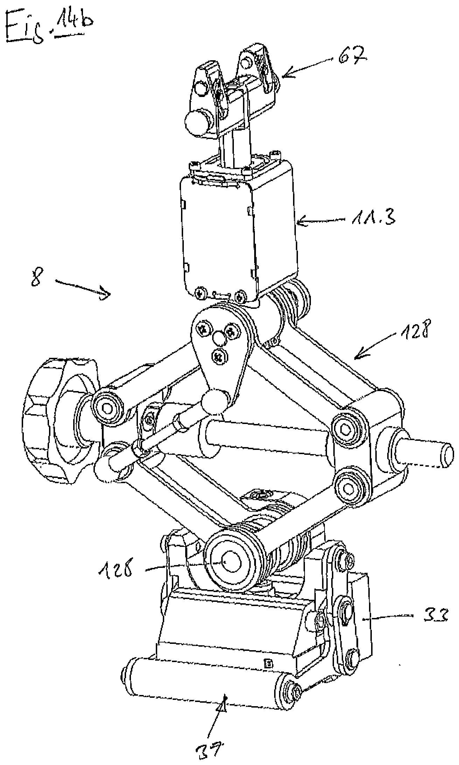

In Fig. 1 ist das Fachwerk 3.1 im Abstand von den beiden Auflagern 4 durch eine am Rahmen 2 lösbar gehaltene Belastungseinrichtung 8 belastet. Die Belastungseinrichtung 8 ist in Fig. 14 gezeigt.

Die Belastungseinrichtung 8 umfasst einen Basiskörper 33, der wie der Basiskörper 33 des Auflagers 4 ausgebildet ist und zum Festklemmen der Belastungseinrichtung 8 am Rahmen 2 dient.

Auf dem Basiskörper 33 ist an einem Drehlager 127 ein Scherengetriebe 128 schwenkbar gelagert, das über ein Elektronikmodul 11.3 mit einem Rohrstück 64 und einem Gelenkverbindungselement 67 verbunden ist. Das Rohrstück 64 ist an einer Wägezelle 44 befestigt, die auf der von dem Scherengetriebe 128 abgewandten Seite des Elektronikmoduls 11.3 befestigt ist.

Über das Gelenkverbindungslement 67 ist die Belastungseinrichtung 8 mit einer Knotenscheibe 7 gelenkig und elektrisch verbindbar, wie in Fig. 1 gezeigt.

Das Rohrstück 64 weist eine Seitenlichtfaser 107 auf, die mit einer RGB-LED 101 des Elektronikmoduls 11 gekoppelt ist. Mittels des Bildschirms 98 des Elektronikmoduls 11.3 und der Seitenlichtfaser 107 ist die Höhe der über das Scherengetriebe 128 in das Fachwerk 3 eingeleiteten Kraft anzeigbar.

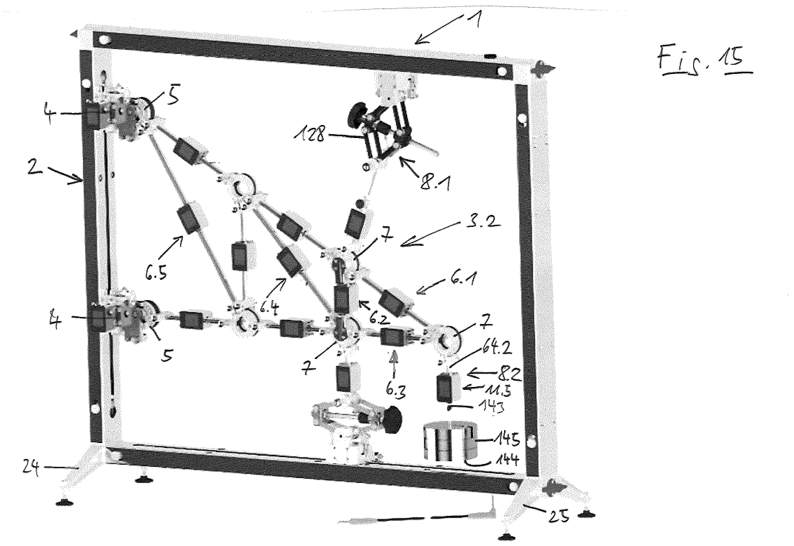

In Fig. 15 ist das Versuchsgerät 1 mit einem anderen Fachwerk 3.2 gezeigt, das zwei Auflager 4, Stäbe 6.1, 6.2, 6.3, 6.4, 6.5 unterschiedlicher Länge, eine Belastungseinrichtung 8.1 mit einem Scherengetriebe 128 und eine Belastungseinrichtung 8.2 mit Gewichten umfasst.

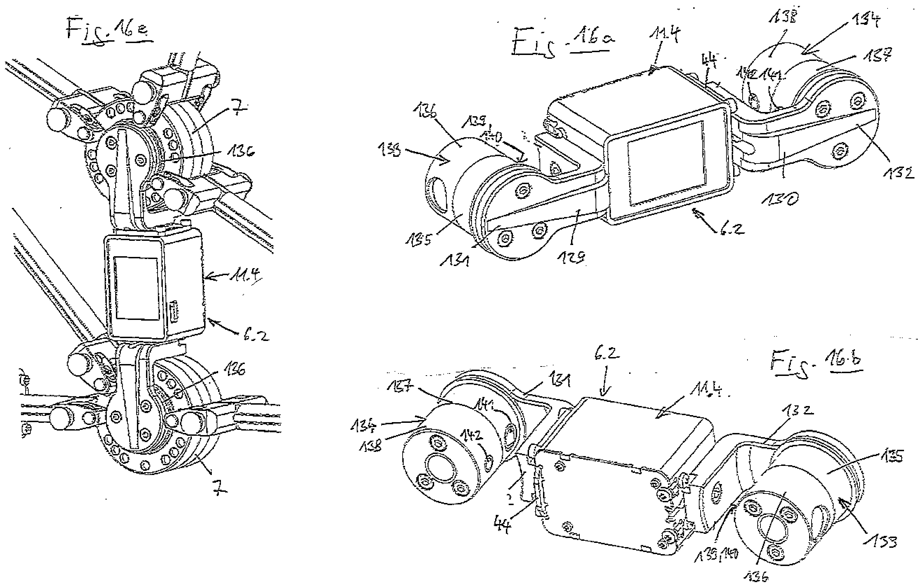

Der kürzeste Stab 6.2 dieses Fachwerkes ist in Fig. 16 abgebildet. Dieser umfasst ein Elektronikmodul 11.4, das auf zwei voneinander abgewandten Seiten jeweils fest mit einem Winkel 129, 130 verbunden ist. Die beiden Winkel 129, 130 haben jeweils zwei in einem rechten Winkel zueinander ausgerichtete Schenkel. Einer der beiden Winkel 130 ist an der Lasche der Wägezelle 44 befestigt. Die nach Außen gerichteten Schenkel 131, 132 tragen jeweils einen Zylinder 133, 134, wobei der Zylinder 133, 134 in Axialrichtung in zwei leitfähige Zylinderabschnitte 135-138 unterteilt ist, die voneinander isoliert sind.

Die Zylinderabschnitte 135 bis 138 weisen jeweils einen radial nach Außen etwas vorstehenden, leitfähigen Federdruckkontakt 139 bis 142 auf.

Die Zylinderabschnitte 135-138 sind jeweils mit einer Seite des Elektronikmoduls 11.4 verkabelt.

Die weiter vorstehenden Zylinderabschnitte 136, 138 liegen jeweils an Masse an.

Der Stab 6.2 ist mit den Zylindern 133, 134 in die zentralen Löcher 115 zweier Knotenscheiben 7 einsetzbar. Nur wenn die Zylinder 133, 134 von der Seite der Knotenscheiben 7 mit einer ringförmigen Stufe 123 eingesetzt werden, schnappen die Federdruckkontakte 139, 141 des weniger weit vorstehenden Zylinderabschnittes 135, 137 in die Rille 124 ein. Hierdurch wird der kurze Stab 6.2 gelenkig und elektrisch mit den Knotenscheiben 7 verbunden.

Wenn die Zylinder 133, 134 von der anderen Seite eingesteckt werden, greifen die Federdruckkontakte 139, 141 nicht in die Rille 124 ein. Zudem verhindern die langen Schenkel 70 des Gelenkverbindungselements 67 das Einsetzen von der anderen Seite.

Die von dem Stab 6.2 übertragene Kraft wird von der Elektronikeinheit 11.4 angezeigt und die zugehörigen Daten werden über die Kontakte an den Laptop 13 weitergeleitet.

Die Belastungseinrichtung 8.2 mit Gewicht unterscheidet sich von der Belastungseinrichtung 8.1 im Wesentlichen dadurch, dass das Elektronikmodul 11.5 unten nicht über ein Scherengetriebe 128 mit einem Basiskörper 33, sondern über eine Stange 143 mit einem Lagerteller 144 für Gewichte verbunden ist und darauf Gewichte 145 angeordnet sind. Das Elektronikmodul 11.5 kann die jeweilige Gewichtskraft anzeigen und die Daten über die Belastung und die Ausrichtung des Stabes an den Laptop 13 weiterleiten.

Die Belastungseinrichtung 8.2 kann die Höhe der aufgebrachten Kraft anzeigen und die Höhe der Kraft und ihre Ausrichtung an den Laptop 13 weiterleiten.

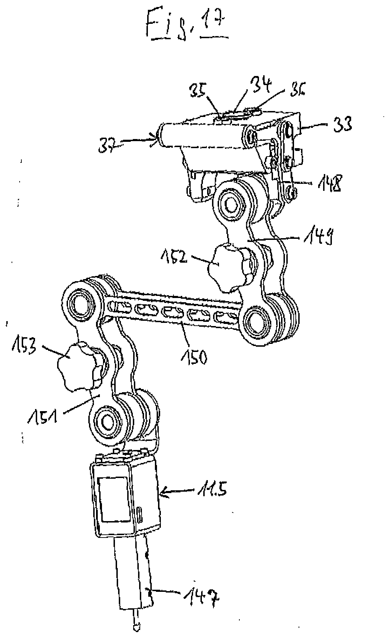

Gemäß Fig. 17 umfasst eine Abstandsmesseinrichtung 146 einen Näherungssensor 147. Sie weist einen Basiskörper 33 zum lösbaren Halten am Rahmen 2 und zum Übertragen von Strom und Daten auf, der wie der Basiskörper 33 des Auflagers 4 mit einer Spanneinrichtung 37 ausgebildet ist.

Von dem Basiskörper 33.1 steht ein Zapfen 148 vor, der über eine serielle Anordnung aus drei Gelenkstäben 149-151 mit einem Elektronikmodul 11.6 verbunden ist. Zwei Gelenkstäbe 149, 151 umfassen jeweils zwei Streifenelemente, die über eine Spanneinrichtung 152, 153 zusammen spannenbar sind, um die Ausrichtung der Gelenkstäbe 149-151 zueinander festzustellen bzw. eine Verstellung zu lösen.

Das Elektronikmodul 11.6 ist mit dem Näherungssensor 147 verbunden. Über die Kontakte 35, 36 am Basiskörper 33.1 werden Strom und Daten übermittelt. Das Elektronikmodul 11.6 zeigt den Abstand des Näherungssensors 147 von einem Körper an, beispielsweise von einer Knotenscheibe 7 des Fachwerkes. Die Daten können an einen Laptop 13 übermittelt wird.

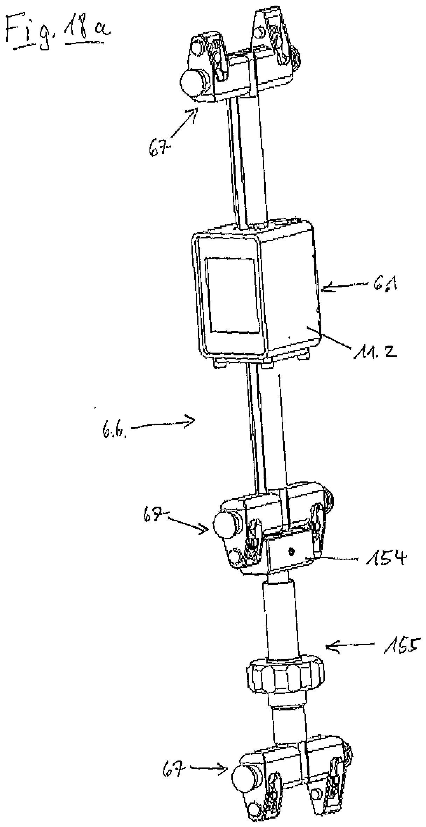

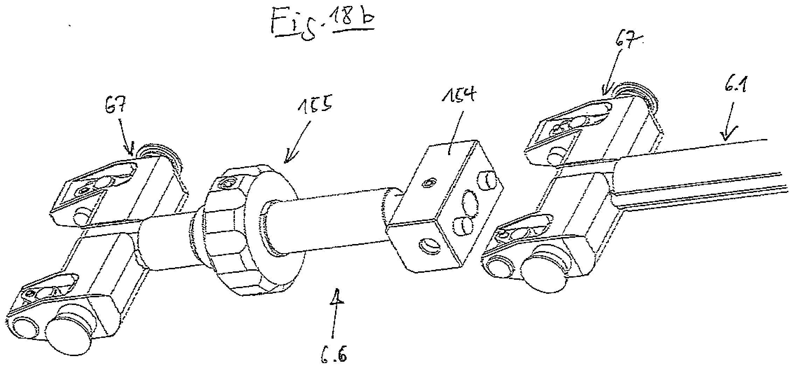

Fig. 18 zeigt einen einstellbaren Stab 6.6. Dieser umfasst einen Stab 6.1 gemäß Fig. 7, wobei ein Gelenkverbindungselement 67 mit einem Klotz 154 einer einstellbaren Stabverlängerung 155 starr verbindbar ist. Strom und Daten werden über das andere Gelenkverbindungselement 67 auf den Stab 6.1 übertragen. Die einstellbare Stabverlängerung 155 weist am anderen Ende ein weiteres Gelenkverbindungselement 67 auf.

Der einstellbare Stab 6.6 kann für die Untersuchung überbestimmte Fachwerke 3 verwendet werden. Durch Einstellen der Länge des Stabes 6.6 kann erreicht werden, dass der Stab eine bestimmte Kraft oder gar keine Kraft überträgt.

Mittels des Rahmens 2, der Auflager 4, der Belastungseinrichtungen 8, der Stäbe 6 und der Knotenscheiben 7 kann der Anwender frei wählbare Fachwerke 3 zusammenbauen.

Das Versuchsgerät kann noch für Versuche mit anderen Versuchsanordnungen als Fachwerke benutzt werden, beispielsweise für Versuche mit Balkenbrücken, Hängebrücken, Bogenbrücken oder anderen Brückenbauformen, für Versuche mit anderen Tragwerken oder für Versuche mit Biegebalken.

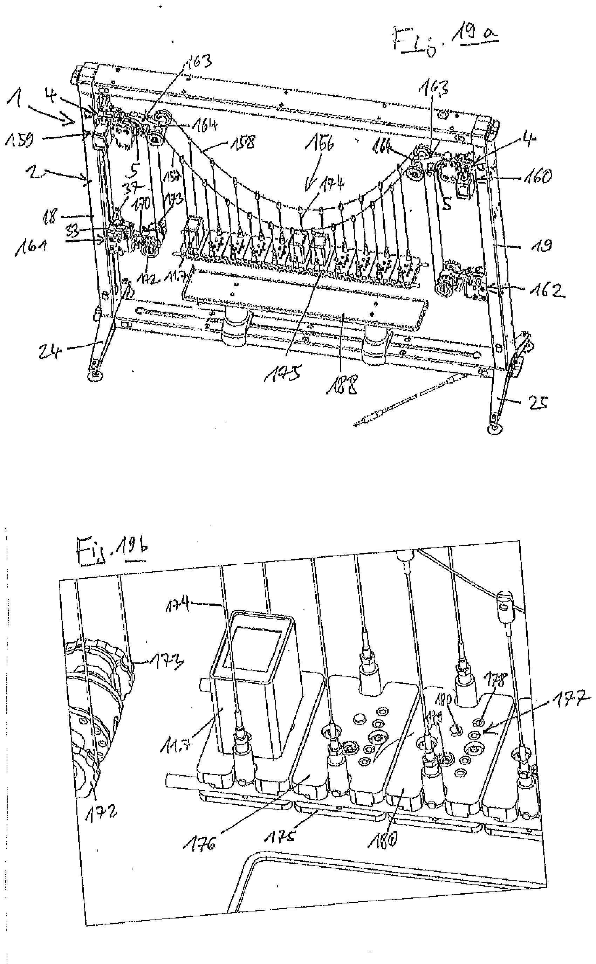

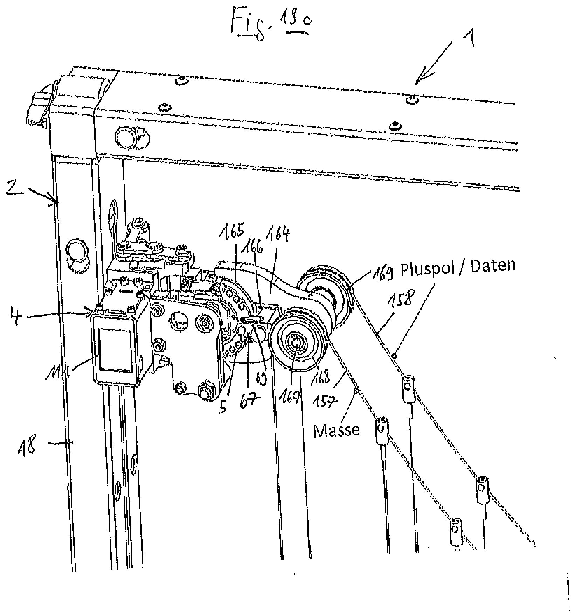

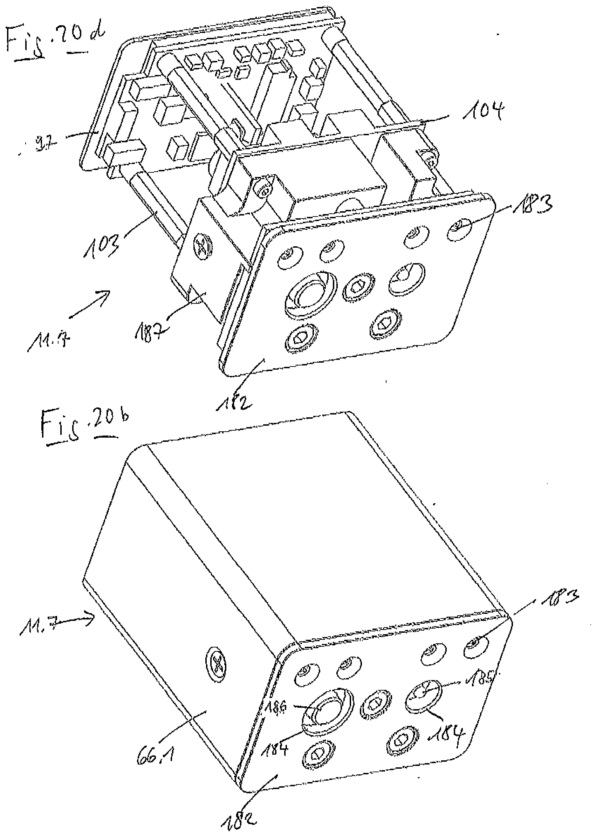

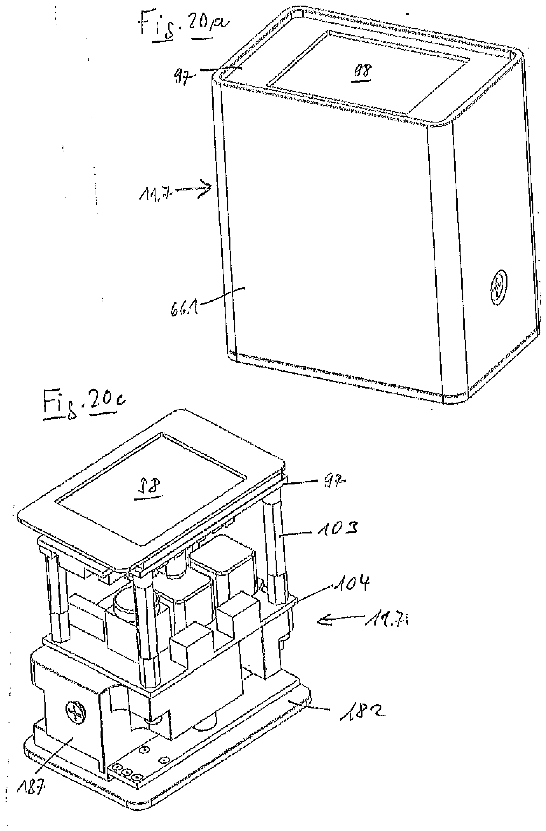

Fig. 19 und 20 zeigen eine Versuchsanordnung mit einer Hängebrücke 156, die zwei parallele Seile 157, 158 aufweist, die an beiden Enden jeweils mittels oberer und unterer Seilaufhängungen 159 bis 162 an den vertikalen Rahmenteilen 18, 19 des Rahmens 2 befestigt sind. Die oberen Seilaufhängungen 159, 160 sind durch Auflager 4 gebildet, deren Knotenscheiben 5 mit Seilumlenkungen 163, 164 verbunden sind. Die Seilumlenkungen 163, 164 weisen jeweils eine Tragplatte 164 auf, die an einem Rand eine halbkreisförmige Aussparung 165 aufweisen, die an den Umfang der Knotenscheibe 5 des Auflagers 4 angepasst ist, sodass sie darauf aufsetzbar ist. In eine rechteckige Ausnehmung 166 an der tiefsten Stelle 165 der Aussparung ist ein Gelenkverbindungselement 67 eingesetzt, sodass es mit den Schenkeln 69, 70 auf beiden Seiten der Tragplatte 164 etwas vorsteht. Das Gelenkverbindungselement 67 ist fest mit der Tragplatte 164 verbunden. Die Tragplatte 164 ist mit der Aussparung 165 auf den Umfang der Knotenscheibe 5 aufsetzbar und die Bolzen 79, 79 des Gelenkverbindungelementes 67 sind mit den mittleren Sackbohrungen 59 der Knotenscheibe 5 verschnappbar. Die Tragplatte 164 steht dann horizontal vom Auflager 4 weg in den Rahmen 2 vor.

Die Tragplatten 164 weisen jeweils in der Nähe des von der Aussparung 165 entfernten Endes eine senkrecht zur Tragplatte 164 gerichtete Welle 167 oder Achse auf, die auf beiden Seiten der Tragplatte 164 jeweils eine drehbar gelagerte Seilscheibe 168, 169 trägt.

Die beiden Seile 157, 158 der Hängebrücke 156 sind an den beiden Enden über die Seilscheiben 168, 169 der beiden oberen Seilaufhängungen 159, 160 geführt und von den Seilscheiben 168, 169 aus vertikal nach unten zu den beiden unteren Seilaufhängungen 161, 162 geführt.

Die beiden unteren Seilaufhängungen 161, 162 weisen jeweils einen kastenförmigen Basiskörper 33 und eine Spanneinrichtung 37 wie das Auflager 4 auf. Von jedem Basiskörper 33 steht horizontal nach innen ein Tragarm 170 vor, an dessen Ende eine horizontale Welle 171 gelagert ist, die auf den beiden Seiten des Tragarms vorstehende Wellenenden aufweist. Auf den Wellenenden sitzen Seiltrommeln 172, 173, an denen die Enden der Seile 157, 158 befestigt sind. Die Seiltrommeln 172, 173 sind in ihrer jeweiligen Drehstellung arretierbar. Mittels der Seiltrommeln 172, 173 sind die Seile 157, 158 zwischen den beiden oberen Seilaufhängungen 159, 160 einstellbar.

Die Seile 157, 158 sind über vertikale Hänger 174 mit einer Fahrbahn 175 verbunden. Die Fahrbahn weist - im Beispiel 11 - gerastete Steckpositionen 176 auf, die jeweils an festgelegten Positionen einen - z. B. 4 Bit-Gray Code 177 tragen, der beispielsweise durch helle und dunkle Plastikkappen 178 gebildet wird. Ferner weist jede Steckposition 176 an vorgegebenen Stellen zwei vorstehende Kontakte 179, 180 für Strom und Daten auf.

Jede Steckposition 176 umfasst eine im Wesentlichen rechteckige Kunststoffplatte mit seitlichen Aussparungen für die Aufnahme der unteren Enden der Hänger.

Bei jeder Steckposition 176 sind der Gray Code 177 und die Kontakte 179, 180 an denselben Stellen ausgebildet.

Die Seilscheibe 168 auf der Seite des Gelenkverbindungselementes mit dem kurzen Schenkel 69 ist über die Welle 167, die Tragplatte 164 und das Gelenkverbindungselement 67 elektrisch leitend mit der an der Masse anliegenden Scheibe 55 der Knotenscheibe 5 verbunden. Die Seilscheibe 169 auf der anderen Seite der Tragplatte 164 ist isolierend gelagert. Ihre Lager sind über Kabel mit den Bolzen in den langen Schenkeln 70 verbunden, um die andere äußere Scheibe 56 der Knotenscheibe 5 zu kontaktieren.

Ferner umfasst die Versuchsanordnung Elektronikmodule 11.7, die auf beliebigen Steckpositionen 176 positionierbar sind. Hierfür weisen die Elektronikmodule 11.7 ein kastenförmiges Gehäuse 66.1 auf, das am oberen Ende durch die Bildschirmplatine 97 mit dem nach außen weisenden Bildschirm 98 und am unteren Ende durch eine Gray Code-Leseplatine 182 mit - im Beispiel 4 - Reflexlichtschranken 183 an der Unterseite geschlossen ist. Zudem weist das Elektronikmodul 11.7 an der Unterseite in Bohrungen 184 stiftförmige Kontakte 185, 186 für Strom und Daten auf. Der schlankere Stift 185 ist mit dem Pluspol und der Stift 186 mit dem größeren Durchmesser mit Masse verbindbar.

Ferner enthalten die Elektronikmodule 11.7 eine Platine 104 für Kommunikation, die mit Stiften 103 der Bildschirmplatine 97 verschraubt ist.

Schließlich ist in dem Elektronikmodul 11.7 ein Gewicht 187 in Form eines Blockes aus Messing angeordnet.

Mittels eines oder mehrerer Elektronikmodule 11.3 ist die Fahrbahn 175 an unterschiedlichen Positionen belastbar. Die jeweils belasteten Positionen sind automatisch mit Hilfe der von den Reflexlichtschranken 183 gelesenen Gray Codes ermittelbar. Ferner kann beispielsweise die Durchbiegung der Fahrbahn 175 an verschiedenen Positionen ermitteln werden, indem der Abstand von einem am unteren horizontalen Rahmenteil befestigten Tisch 188 gemessen wird. Alternativ kann die Verformung der Fahrbahn 175 an verschiedenen Stellen mittels eines Näherungssensors ermittelt werden.

### Bezugszeichenliste

1 Versuchsgerät
2 Rahmen
3 Fachwerk
4 Auflager
5 Knotenscheibe (integrierte)
6 Stab
7 Knotenscheibe (separate)
8 Belastungseinrichtung
9 Mastermodul
10 Spannungsversorgung
11 Elektronikmodul
12 Datenverarbeitungseinrichtung
13 Laptop
14 Verbindungskabel
15 Buchse
16-19 Rahmenteil
20-23 Eckverbinder
24, 25 Standfuß
26 Stellteller
27 Nut
28 Schlüssellochkontur
29, 30 Kontakt
31, 32 Bohrung
33 Basiskörper
34 Pilz
35, 36 Kontakt (rahmenseitig)
37 Spanneinrichtung
38 Spannhebel
39 Getriebe
40 Trägerplatte
41 erstes Parallelogrammgetriebe
42 Lagerblock
43 zweites Parallelogrammgetriebe
44 Wägezelle
45 Stanzteil
46 Rahmen
47 Loch
48, 49 Biegebalken
50 Brücke
51 Lasche
52 Loch
53 DMS-Messsystem/ DMS-Sensor
54 Verkapselung
55, 56, 57 Scheibe
58 Schraube
59 Sackbohrung
60, 61 Kontakt (fachwerkseitig)
62 Stufe
63 Rohr
64, 65 Rohrstück
66 Gehäuse
67 Gelenkverbindungselement
68 Traverse
69, 70 Schenkel
71 Schnappmechanismus
72, 73 Knöpfchen
74, 75 Schraubenfeder
76, 77 Hebelmechanik
78, 79 Bolzen
80-83 Hebel
84, 85 Welle
86, 87 Ringnut
88-91 Bohrung
92-94 Zapfen
95, 96 Vertiefung
97 Bildschirmplatine
98 Bildschirm
99 Verstärker
100 Mikrocontroller
101, 102 RGB-LED
103 Stift
104 Platine
105, 106 Nut
107, 108 Seitenlichtfaser
109 Lagesensor
110, 111 Anschlüsse
112 Hochfrequenzsperre
113, 114 Modem
115 Loch
116, 117, 118 Scheibe
119 Bohrung
120 Schraube
121 Sackbohrung
122 Gelenkverbindungselement
123 Stufe
124 Rille
125, 126 Stift
127 Drehlager
128 Scherengetriebe
129, 130 Winkel
131, 132 Schenkel
133, 134 Zylinder
135-138 Zylinderabschnitt
139-142 Federdruckkontakt
143 Stange
144 Lagerteller
145 Gewicht
146 Abstandsmesseinrichtung
147 Näherungssensor
148 Zapfen
149-151 Gelenkstab
152, 153 Spanneinrichtung
154 Klotz
155 Stabverlängerung
156 Hängebrücke
157, 158 Seil
159-162 Seilaufhängung
163 Seilumlenkung
164 Tragplatte
165 Aussparung
166 Ausnehmung
167 Welle
168, 169 Seilscheibe
170 Tragarm
171 Welle
172, 173 Seiltrommel
174 Hänger
175 Fahrbahn
176 Steckposition
177 Gray Code
178 Plastikkappe
179, 180 Kontakt
181 Kunststoffplatte
182 Gray Code-Leseplatine
183 Reflexlichtschranke
184 Bohrung
185, 186 Kontakt
187 Gewicht
188 Tisch

## Patentansprüche

1. Versuchsgerät zum Durchführen von Untersuchungen an Fachwerken umfassend
• einen Rahmen zum Halten eines Fachwerkes,
• Auflager zum Halten des Fachwerkes am Rahmen, die Knotenscheiben zum Verbinden mit Stäben mit wählbarer Ausrichtung der Stäbe auf die Auflager aufweisen,
• Einrichtungen zum lösbaren Halten der Auflager an verschiedenen wählbaren Positionen am Rahmen,
• Stäbe zum Bilden eines Fachwerkes,
• mindestens eine Knotenscheibe zum Verbinden von Stäben miteinander in wählbarer Ausrichtung,
• Gelenkverbindungselemente an den Knotenscheiben und den Enden der Stäbe zum gelenkigen Verbinden der Stäbe mit den Knotenscheiben,
• Kontakte für Strom und Daten an den Knotenscheiben und den beiden Enden der Stäbe, um Strom und Daten zwischen den Knotenscheiben und den Stäben zu übertragen, wenn die Knotenscheiben mit den Stäben über die Gelenkverbindungselemente miteinander verbunden sind,
• wobei die Stäbe jeweils ein mit den Kontakten für Strom und Daten an ihren beiden Enden verbundenes Elektronikmodul zum Weiterleiten von Strom und Empfangen und Übermitteln von Daten aufweisen.

2. Versuchsgerät nach Anspruch 1, bei dem der Rahmen und die Auflager Kontakte für Strom und Daten zwischen Rahmen und Auflager umfassen, um Strom und Daten zwischen den Auflagern und dem Rahmen zu übertragen, wenn die Auflager lösbar an dem Rahmen gehalten sind und der Rahmen Leitungen zum Weiterleiten von Strom von einer Spannungsversorgung zu den Kontakten und Einrichtungen zum Übertragen von Daten zwischen einem PC, Laptop, Smartphone, Tablet oder andere elektronische Datenverarbeitungseinrichtung und den Kontakten aufweist.

3. Versuchsgerät nach Anspruch 1 oder 2, bei dem die Auflager jeweils ein mit seinen rahmenseitigen Kontakten für Strom und Daten und seinen fachwerkseitigen Kontakten für Strom und Daten verbundenes Elektronikmodul zum Weiterleiten von Strom und Empfangen und Übermitteln von Daten aufweisen.

4. Versuchsgerät nach einem der Ansprüche 1 bis 3, bei dem das Elektronikmodul einen Mikrocontroller umfasst, der mit den Kontakten an den beiden Enden des Stabes oder den rahmenseitigen und den fachwerkseitigen Kontakten des Auflagers verbunden ist, um Daten zu empfangen, zu verarbeiten und zu übermitteln.

5. Versuchsgerät nach Anspruch 4, bei dem das Elektronikmodul verschiedene Anschlüsse aufweist, die mit den Kontakten an den verschiedenen Enden des Stabes oder den rahmenseitigen und den fachwerkseitigen Kontakten des Auflagers verbunden sind, wobei das Elektronikmodul eine die Anschlüsse überbrückende Anordnung aus zwei Modems und einem zwischen den Modems angeordneten Mikrocontroller umfasst.

6. Versuchsgerät nach Anspruch 4 oder 5, bei dem das Elektronikmodul zwischen verschiedenen Anschlüssen, die mit den Kontakten an den verschiedenen Enden des Stabes oder mit den rahmenseitigen und den fachwerkseitigen Kontakten des Auflagers verbunden sind, eine die Anschlüsse verbindende Verbindungsleitung mit einer Hochfrequenzsperre zum Blockieren des Durchganges von Daten über die Verbindungsleitung aufweist.

7. Versuchsgerät nach einem der Ansprüche 4 bis 6, bei dem das Elektronikmodul mindestens eine Wägezelle umfasst, um mindestens eine auf den Stab und/oder Auflager wirkende Kraft zu erfassen, die vorzugsweise über einen Verstärker mit dem Mikrocontroller verbunden ist.

8. Versuchsgerät nach einem der Ansprüche 4 bis 7, bei dem das Elektronikmodul einen Lagesensor umfasst, der vorzugsweise über einen Verstärker mit dem Mikrocontroller verbunden ist.

9. Versuchsgerät nach an der Ansprüche 1 bis 8, bei dem das Elektronikmodul ein Display und/oder mit mindestens einer mit einer Seitenlichtfaser an einer Seite des Stabes oder des Auflagers gekoppelte LED umfasst, wobei das Display und/oder die mindestens eine LED mit dem Mikrocontroller verbunden ist.

10. Versuchsgerät nach einem der Ansprüche 1 bis 9, bei dem die Gelenkverbindungselemente Schnappelemente zum Verschnappen der Stäbe mit den Knotenscheiben aufweisen.

11. Versuchsgerät nach einem der Ansprüche 1 bis 10, bei dem die Auflager Klemmeinrichtungen zum Festklemmen am Rahmen aufweisen.

12. Versuchsgerät nach Anspruch 11, bei der die Auflager nach außen vorstehende, verlagerbare Pilze und der Rahmen Schlüssellochkonturen zum Verankern der Pilze aufweist, wobei die Auflager Spanneinrichtungen umfassen, um die Pilze teilweise in die Auflager hineinzuziehen und die Auflager am Rahmen festzuklemmen.

13. Versuchsgerät nach einem der Ansprüche 1 bis 12, bei dem die Kontakte zum Übertragen von Strom und Daten einen Massekontakt und einen gegenüber Masse isolierten Kontakt aufweisen und/oder weisen die Knotenscheiben, die Stäbe, die Auflager und/oder der Rahmen eine durch einen metallischen Körper der Knotenscheiben, Stäbe, Auflager und/oder Rahmen gebildete Leitung und eine isolierte elektrische Leitung zum Übertragen von Strom und Daten auf.

14. Versuchsgerät nach einem der Ansprüche 1 bis 13, umfassend mindestens einen Stab mit einer integrierten Belastungseinrichtung und/oder mindestens einen Stab mit integriertem Gewicht zum Aufbringen einer Belastung auf das Fachwerk.

15. Versuchsgerät nach einem der Ansprüche 1 bis 14 umfassend einen PC, Laptop, Smartphone, Tablet oder eine andere elektronische Datenverarbeitungseinrichtung, die eine Software aufweist, die ausgebildet ist, Daten an bestimmte Elektronikmodule auszusenden, von den bestimmten Elektronikmodulen zurückgesandten Daten zu empfangen, aus den empfangenen Daten die Lage der Stäbe, der Knotenscheiben und/oder des Auflagers des Fachwerkes zu ermitteln oder auf die verschiedenen Stäbe und/oder Auflager des Fachwerkes wirkenden Kräfte zu ermitteln und die ermittelten Ergebnisse mittels eine Ausgabeeinrichtung auszugeben und/oder zu speichern.

## Claims

1. A test apparatus for carrying out investigations on trusses, comprising
• a frame for holding a truss,
• supports for holding the truss on the frame, which supports have junction plates for connecting to bars with a selectable alignment of the bars on the supports,
• apparatuses for detachably holding the supports in various selectable positions on the frame,
• bars for forming a truss,
• at least one junction plate for connecting bars to one another in a selectable alignment,
• articulated connecting elements on the junction plates and the ends of the bars for connecting the bars to the junction plates in an articulated manner,
• contacts for power and data on the junction plates and the two ends of the bars, in order to transfer power and data between the junction plates and the bars when the junction plates are connected to one another with the bars via the articulated connecting elements,
• wherein the bars each have an electronic module for conveying power and receiving and transmitting data, which electronic module is connected to the contacts for power and data on their two ends.

2. The test apparatus according to Claim 1, in which the frame and the supports comprise contacts for power and data between the frame and support in order to transfer power and data between the supports and the frame when the supports are detachably held on the frame, and the frame has lines for conveying power from a voltage supply to the contacts and apparatuses for transferring data between a PC, laptop, smartphone, tablet or other electronic data processing apparatus and the contacts.

3. The test apparatus according to Claim 1 or 2, in which the supports each have an electronic module for conveying power and receiving and transmitting data, which electronic module is connected to its contacts on the frame side for power and data and its contacts on the truss side for power and data.

4. The test apparatus according to any one of Claims 1 to 3, in which the electronic module comprises a microcontroller which is connected to the contacts on the two ends of the bar or the contacts on the frame side and the truss side of the support, in order to receive, process and transmit data.

5. The test apparatus according to Claim 4, in which the electronic module has various connections which are connected to the contacts on the various ends of the bar or the contacts on the frame side and the truss side of the support, wherein the electronic module comprises an arrangement bridging the connections, which arrangement is made up of two modems and a microcontroller arranged between the modems.

6. The test apparatus according to Claim 4 or 5, in which the electronic module has a connecting line connecting the connections with a high-frequency block for blocking the passage of data via the connecting line between various connections which are connected to the contacts on the various ends of the bar or to the contacts on the frame side and the truss side of the support.

7. The test apparatus according to any one of Claims 4 to 6, in which the electronic module comprises at least one load cell in order to capture at least one force acting on the bar and/or support, which load cell is preferably connected via an amplifier to the microcontroller.

8. The test apparatus according to any one of Claims 4 to 7, in which the electronic module comprises a position sensor which is preferably connected via an amplifier to the microcontroller.

9. The test apparatus according to any one of Claims 1 to 8, in which the electronic module comprises a display and/or having at least one LED coupled to a lateral light fiber on one side of the bar or the support, wherein the display and/or the at least one LED is/are connected to the microcontroller.

10. The test apparatus according to any one of Claims 1 to 9, in which the articulated connecting elements have snapping elements for snap-fitting the bars with the junction plates.

11. The test apparatus according to any one of Claims 1 to 10, in which the supports have clamping apparatuses for fixing to the frame.

12. The test apparatus according to Claim 11, in which the supports have outwardly projecting, displaceable mushrooms and the frame has keyhole contours for anchoring the mushrooms, wherein the supports comprise tensioning apparatuses in order to partially pull the mushrooms into the supports and to fix the supports to the frame.

13. The test apparatus according to any one of Claims 1 to 12, in which the contacts for transferring power and data have a ground contact and a contact which is insulated with respect to ground and/or the junction plates, the bars, the supports and/or the frame has/have a line formed through a metallic body of the junction plates, bars, supports and/or frame and an insulated electrical line for transferring power and data.

14. The test apparatus according to any one of Claims 1 to 13, comprising at least one bar having an integrated loading apparatus and/or at least one bar having an integrated weight for applying a load to the truss.

15. The test apparatus according to any one of Claims 1 to 14, comprising a PC, laptop, smartphone, tablet or another electronic data processing apparatus which has software which is configured to output data to specific electronic modules, to receive data returned by the specific electronic modules, to determine the position of the bars, the junction plates and/or the support of the truss from the received data or to determine forces acting on the various bars and/or supports of the truss, and to output and/or to store the determined results by means of an output apparatus.

## Revendications

1. Appareil d'essai permettant de mettre en oeuvre des essais sur des treillis, comportant
• un cadre destiné à maintenir le treillis,
• des supports destinés à maintenir le treillis sur le cadre, lesquels présentent des disques de jonction destinés à la liaison avec des tiges selon une orientation sélectionnable des tiges sur les supports,
• des dispositifs destinés à maintenir des supports de façon amovible à différentes positions sélectionnables sur le cadre,
• des tiges destinées à former un treillis,
• au moins un disque de jonction destiné à relier des tiges entre elles selon une orientation sélectionnable,
• des éléments de liaison articulés sur les disques de jonction et aux extrémités des tiges, destinés à relier les tiges de façon articulée aux disques de jonction,
• des contacts destinés au courant et aux données sur les disques de jonction et aux deux extrémités des tiges, pour la transmission de courant et de données entre les disques de jonction et les tiges, lorsque les disques de jonction sont reliés aux tiges par le biais des éléments de liaison articulés,
• dans lequel, à leurs deux extrémités, les tiges présentent respectivement un module électronique relié aux contacts destinés au courant et aux données, pour le transfert de courant et la réception et la communication de données.

2. Appareil d'essai selon la revendication 1, dans lequel le cadre et les supports comportent des contacts destinés au courant et aux données entre le cadre et les supports, pour la transmission de courant et de données entre les supports et le cadre, lorsque les supports sont maintenus de façon amovible sur le cadre et le cadre présente des lignes destinées au transfert de courant à partir d'une alimentation vers les contacts et des dispositifs destinés à la transmission de données entre un PC, un ordinateur portable, un smartphone, une tablette ou un autre dispositif de traitement de données électronique et les contacts.

3. Appareil d'essai selon la revendication 1 ou 2, dans lequel les supports présentent respectivement un module électronique relié à leurs contacts côté cadre destinés au courant et aux données et à leurs contacts côté treillis destinés au courant et aux données, pour le transfert de courant et la réception et la communication de données.

4. Appareil d'essai selon l'une des revendications 1 à 3, dans lequel le module électronique comporte un microcontrôleur, lequel est relié aux contacts aux deux extrémités de la tige ou aux contacts côté cadre et côté treillis du support, pour la réception, le traitement et la communication de données.

5. Appareil d'essai selon la revendication 4, dans lequel le module électronique présente différents raccords, lesquels sont reliés aux contacts situés aux différentes extrémités de la tige ou aux contacts côté cadre et côté treillis du support, dans lequel le module électronique comporte un ensemble constitué de deux modems et d'un microcontrôleur agencé entre les modems, lequel couvre les raccords.

6. Appareil d'essai selon la revendication 4 ou 5, dans lequel, entre différents raccords reliés aux contacts situés aux différentes extrémités de la tige ou aux contacts côté cadre et côté treillis du support, le module électronique présente une ligne de liaison reliant les raccords, avec une barrière à haute fréquence destinée à bloquer le passage de données par le biais de la ligne de liaison.

7. Appareil d'essai selon l'une des revendications 4 à 6, dans lequel le module électronique comporte au moins une cellule de pesée destinée à détecter au moins une force agissant sur la tige et/ou le support, laquelle est de préférence reliée au microcontrôleur par le biais d'un amplificateur.

8. Appareil d'essai selon l'une des revendications 4 à 7, dans lequel le module électronique comporte un capteur de position, lequel est de préférence relié au microcontrôleur par le biais d'un amplificateur.

9. Appareil d'essai selon l'une des revendications 1 à 8, dans lequel le module électronique comporte un affichage et/ou au moins une DEL accouplée à au moins une fibre optique latérale sur un côté de la tige ou du support, dans lequel l'affichage et/ou l'au moins une DEL sont reliés au microcontrôleur.

10. Appareil d'essai selon l'une des revendications 1 à 9, dans lequel les éléments de liaison articulée présentent des éléments d'encliquetage destinés à l'encliquetage des tiges avec les disques de jonction.

11. Appareil d'essai selon l'une des revendications 1 à 10, dans lequel les supports présentent des dispositifs de serrage destinés au serrage sur le cadre.

12. Appareil d'essai selon la revendication 11, dans lequel le support comporte des champignons déplaçables faisant saillie vers l'extérieur et le cadre comporte des contours de trou de serrure destinés à l'ancrage des champignons, dans lequel les supports comportent des dispositifs de tension destinés à l'insertion des champignons partiellement dans les supports et au blocage des supports sur le cadre.

13. Appareil d'essai selon l'une des revendications 1 à 12, dans lequel les contacts destinés à la transmission de courant et de données présentent un contact de masse et un contact isolé vis-à-vis de la masse et/ou les disques de j onction, les tiges, les supports et/ou le cadre présentent une ligne formée par un corps métallique des disques de jonction, des tiges, des supports et/ou du cadre et une ligne électrique isolée destinée à la transmission de courant et de données.

14. Appareil d'essai selon l'une des revendications 1 à 13, comportant au moins une tige avec un dispositif de charge intégré et/ou au moins une tige avec un poids intégré pour l'application d'une charge sur le treillis.

15. Appareil d'essai selon l'une des revendications 1 à 14, comportant un PC, un ordinateur portable, un smartphone, une tablette ou un autre dispositif de traitement de données électronique, présentant un logiciel conçu pour émettre des données vers des modules électroniques déterminés, recevoir des données renvoyées par les modules électroniques déterminés, déterminer la position des tiges, des disques de jonction et/ou du support du treillis à partir des données reçues ou déterminer des forces agissant sur les différentes tiges et/ou sur les différents supports du treillis et éditer et/ou enregistrer les résultats déterminés au moyen d'un dispositif d'édition.
